# EUROPEAN PATENT APPLICATION

(11) **EP 3 010 276 A1**
(43) Date of publication of application: **20.04.2016**
(21) Application number: 15382033.7
(22) Date of filing: 02.02.2015
(51) Int. Cl.: H04W 16/26, H04L 5/00, H04W 84/04, H04W 88/04, H04W 76/02

(54) **Configuration of communication devices**

(30) Priority: 13.10.2014 EP 14382390; 05.12.2014 EP 14382497; 05.12.2014 EP 14382499; 26.12.2014 EP 14382571; 26.12.2014 EP 14382572
(71) Applicant: Vodafone IP Licensing Limited, The Connection Newbury Berkshire RG14 2FN (GB)
(72) Inventor: De Pasquale, Andrea, E-28042 Madrid (ES); Güemes Cabreja, Iñigo, E-28042 Madrid (ES); Le Pezennec, Yannick, E-28042 Madrid (ES)
(74) Representative: Boult Wade Tennant

(57) **Abstract**

Characteristics of communication devices in a cellular telecommunications network, such as user equipment (UE) are analysed and, where these characteristics indicate that a given device has suitable characteristics, that device is considered a candidate for configuration to provide radio coverage assistance. A measure of the degree of coverage assistance for each candidate is then compared to a reference value and the candidate is configured to provide radio coverage assistance only when the coverage assistance measure exceeds the reference value.

## Description

### Field of the Disclosure

This disclosure relates to the configuration of communication devices. In particular the disclosure relates to the conditional configuration of communication devices in a telecommunication system that provides wireless wide area communications in cellular telecommunications networks.

### Background to the Invention

Cellular telecommunications networks characteristically provide "cells" of radio communication coverage between communication devices (which are typically mobile) and a core network (with a "downlink" from core network to communication device and an "uplink" in the opposite direction).

Various radio access technologies (RATs) are implemented: currently *digital* cellular networks are the most common and these are loosely classed as second generation (2G), third generation (3G), fourth generation (4G), etc. technologies according to whether the RAT achieves effective data communications that meet increasingly challenging requirements. In meeting these requirements, the technologies make different uses of the available radio frequency (RF) bandwidth: neighbouring cells in 2G technologies, for example, are deployed so that they use RF bandwidth at different frequencies to avoid interference.

To ensure effective coverage of a large geographic area, a plurality of cells are provided by respective network nodes referred to variously as base transceiver stations and base stations. Base (transceiver) stations are associated with one or more antenna arrays which in turn establish respective cells. They are controlled at least in part by other entities in the core network known as controllers (in 3G technologies such as UMTS these are referred to as radio network controllers, RNCs). More recently certain categories of base transceiver stations, referred to as eNodeBs or eNBs in the context of LTE, implement both base station functionality and at least some controller functionality. The antenna arrays (and thus, often, the base stations) are geographically distributed so that the coverage of each cell typically overlaps with that of neighbouring cells only at the cell edge. The RATs aim to ensure that communication devices are provided with continuous coverage even if they are moving from the coverage of a first cell to that of a second across the cell edge region: to do this they use a reselection technique referred to as "handover" (or "handoff"). Handoff is described as "soft" when the procedure allows for a transition period during which control and/or user data traffic intended for a given communication device is routed to the device through more than one of the cells, in other words the device is permitted to "camp" on more than one cell.

Providing communication devices with coverage at cell edge typically requires more network resources; for instance transmission power needs to be higher in the downlink in order for the RF signal to propagate to the cell edge.

Release '99 of the W-CDMA Standard enabled the reuse of the same frequency at cell edge with soft handover (i.e. handover having a transition phase where a terminal effectively camps on both source and target cells).

In later releases of 3G RATs, however, HSDPA, for instance, has mainly removed in downlink the concept of soft handover: data is transmitted from only one cell to the terminal.

In many parts of the world, 4G RATs (such those compliant with the 3GPP standards known as Long Term Evolution (LTE)) are deployed. Like the later 3G releases, LTE uses universal frequency reuse (where cells sufficiently far apart operate on the same frequency) without soft handoff. Consequently, high levels of interference and low SINR (signal to interference plus noise ratio) can be expected near the cell edge. This means users at the cell edge in LTE (and HSDPA, etc.) require more radio resources (i.e. user plane resource blocks, control channel resource blocks, etc.) than users closer to the serving base transceiver stations (i.e. eNBs). Accordingly, the potential for the cell be impacted increases when there is an increase in the number and activity of users at/near to the cell edge.

LTE is also specified to handle different types of base transceiver station entities. The requirement for cellular communications coverage is far from uniform across a typical geographic area. Furthermore natural features or features of the built environment introduce additional constraints upon the operation of base station entities.

The most prevalent class of base transceiver station is the wide area eNodeB which provides coverage over a wide geographical spread (spanning distances of up to 20km) - this is sometimes termed the "macro (layer) eNB" type. Such eNBs often provide more than one "cell" or sector.

Base transceiver stations of more limited transmit power than the macro eNBs, and typically providing one cell or sector, are referred to as micro eNBs.

Smaller cells may be provided by devices of even lower power: local area eNBs (or picocell base stations) and home eNBs (or femtocell base stations). The resulting femtocells and picocells are sometimes referred to generally as "small cells". These classes of base transceiver stations are typically used in areas where coverage would otherwise be inadequate or awkward to maintain using conventional eNB equipment. The main distinction between local area and home eNBs is that in the case of the home eNBs the location and control of the device lies with the end-user rather than the network operator; these devices conventionally offer communication services to a "white-list" of home-users rather than any network subscribers that happen to be within coverage.

LTE has a hierarchical architecture so that a wide area layer of coverage (the macro layer) may overlap or encompass geographic regions within the coverage of smaller cells (the "micro layer"). Nevertheless there may be a preference on behalf of the network operator to have uplink and/or downlink traffic for certain devices handed down to the micro layer; to free up capacity in the macro layer for devices that are out of micro layer coverage, for example.

There are certain network conditions where individual communication devices in cellular networks have a disproportionately detrimental effect on the network performance.

In certain cases, for example, one or more terminals (also termed "user equipment" or simply UE) may be close to the edge of a serving cell. A small number of active users at cell edge can consume a high number of cell resources (e.g. LTE resource blocks) since cell edge typically correlates to poor coverage; implying that a higher number of resources must be dedicated to the cell edge users to provide a throughput at a given level when compared to the demand for resources by users that are in better radio conditions (i.e. away from the cell edges). Serving radio resources to communication devices at cell-edge has a higher cost in terms of resource allocation and power usage than a similar device in a region of the cell closer to a serving base transceiver station system (such as an eNodeB).

When cellular networks are deployed, they are often specified with greater capacity than is forecast to be required by the existing communication devices. However, the numbers of communication devices and the demand for ever more network resources means that the network may be affected by capacity problems in the radio interface more often than is acceptable.

Network operators wish to improve the efficiency of the use of their networks at or near cell edges.

It is known to address the cell edge problem by:
- Increasing the performance at cell edge, for instance by adding more and more complex software in the macrocells to improve the cell edge performance (usually within the area of the coordinated scheduling between adjacent cells). In certain cases, such as for the CoMP (Coordinated Multi Point) feature described in 3GPP Release 11, the improved cell edge performance brings with it the need for dedicated transmit (Tx) and receive (Rx) antennas associated with one or more macro eNBs.
- Installing fixed Small Cells (i.e. local area eNodeBs) to increase system capacity.

The installation of fixed small cells by a network operator brings with it the burden of finding suitable locations, paying for the site rental, and deploying additional cables to connect the fixed Small Cells to other nodes of the network. Furthermore, installation and commissioning (including configuring) of fixed small cells takes time: even if wireless backhaul is used instead of cables, the fixed small cells need to be installed in a suitable position and configured for operation at that location. In some cases, this process may include the configuration and testing of directional antennas associated with such small cell devices which require the skills of a professional radio engineer. In addition, where the small cell device fails or otherwise requires servicing, the device and the installation site needs to be accessible by the operator: since these devices are typically the property of the network operator but located on private land and in sometimes inaccessible locations, there are likely to be logistical and practical obstacles to intervention by one of the operator's engineers.

The LTE standards (Release 10 (and later) of the 3GPP) also describe two further Radio Access Network entities, relays and repeaters, which can be used to address the problem of cell edges. Both types of entity provide extension of coverage for one cell of an existing base transceiver station.

A repeater is communicatively tied to a corresponding (typically macro) eNB, having a first antenna within a given cell (the "donor cell") of the eNB and a second antenna directed towards a coverage area where coverage extension is required. In certain instances, a repeater merely retransmits (i.e. re-broadcasts) a signal, received at a first frequency, at a second frequency, typically amplifying the repeated signal. Uplink and downlink signals may thus be conveyed through repeaters without any need for decoding.

Repeaters specified in Release 10 (and later) of the 3GPP standards decode the (incoming) signal and then recode and retransmit that signal: this new class of repeater is referred to as a "relay".

A relay is also communicatively tied to a corresponding eNB. It too has a first antenna within a given cell (the "donor cell") of the eNB and a second antenna directed towards a target coverage area. Relays however form their own cells and operate in many ways as base transceiver stations in their own right. Relays decode the signals from the donor cell, applying any necessary error correction, and make decisions about how radio resources (such as the channels within each radio subframe) are assigned.

These approaches seek to increase the capacity or coverage of the cellular network by addition of further network equipment at locations in the network where cell edge problems regularly occur (or are forecast).

Network conditions very often change over time: for instance, individual communication devices that, by virtue of their location at the cell edge and active use of the network, have a detrimental effect on the network performance at one time, may, at other times, be idle and cause no such effect. Furthermore, as UEs are typically mobile, they may have moved outside the affected cell entirely or closer to the base transceiver station equipment that serves the cell - either way, reducing the detrimental effect.

It is therefore desirable to ensure that the network can adapt to the presence of dynamic effects upon capacity and coverage and in addition to provide a system that allows the extension of coverage in a cellular network that can be deployed dynamically without requiring the siting of additional radio equipment near regions of poor radio coverage.

### Summary of the Invention

According to a first aspect of the present disclosure, there is provided a method for determining functionality of communication devices in a cellular communication network including a macrolayer cellular communication network, the method comprising: determining device status for a first communication device; determining whether a radio coverage provided by the first communication device over a selected geographical area is acceptable; and depending upon the device statusand radio coverage determinations, selecting the first communication device as suitable for configuration to provide the radio coverage to at least one second communication device within the selected geographical area.

In certain embodiments, determining whether a radio coverage provided by the first communication device over a selected geographical area is acceptable comprises: determining a location of the first communication device; estimating the radio coverage area offered by the first communication device at the determined location; and generating an indication of acceptability when the estimated radio coverage area offered by the first communication device improves a radio coverage area provided in the cellular communication network.

This improvement may be calculated by adding the estimated radio coverage area offered by the first communication device to the radio coverage area provided in the cellular communication network and deducting the radio coverage area provided in the cellular communication network in the absence of the radio coverage provided by the first communication device.

In certain embodiments, determining whether a radio coverage provided by the first communication device over a selected geographical area is acceptable includes: determining whether the radio performance of the macrolayer cellular communication network provided to the first communication device is acceptable. Determining whether the radio performance of the macrolayer cellular communication network provided to the first communication device is acceptable may then comprise: determining a location of the first communication device; requesting historical data for a region corresponding to the location, said data including at least one metric of the radio performance of the macrolayer cellular communication network at the region; and generating an indication of acceptability if the metric exceeds a coverage threshold.

In certain alternative embodiments, determining whether the radio performance of the macrolayer cellular communication network provided to the first communication device is acceptable may comprise: obtaining a measurement of the strength of radio signal from the macrolayer communication network provided to the first communication device; and generating an indication of acceptability if the measured strength exceeds a signal strength threshold.

In certain embodiments, the method may further comprise configuring the first communication device to provide the radio coverage depending upon comparison with at least one further communication device selected as suitable for configuration to provide a corresponding radio coverage to at least one second communication device in the selected geographical area.

The at least one further communication device may then be selected as suitable for configuration to provide a corresponding radio coverage by: determining device status for said further communication device; determining whether a further radio coverage provided by the further communication device over the selected geographical area is acceptable; and selecting the at least one further communication device as suitable for configuration to provide the radio coverage in dependence upon the device status and radio coverage determinations; and the comparison with at least one further communication device may comprise comparing the radio coverage provided by the first communication device with the radio coverage provided by the at least one further communication device.

Alternatively the comparison with at least one further communication device may comprise comparing the radio coverage area provided by the first communication device with the radio coverage area provided by a respective further communication device. Here the comparison of radio coverage areas may comprise: for each communication device, estimating the proportion of the corresponding coverage area that overlaps a cell edge region of the radio coverage provided in the cellular communication network; and comparing the estimated proportion for the first communication device with the estimated proportions for respective further communication devices. The first communication device may then be configured to provide the radio coverage where the estimated proportion for the first communication device exceeds the estimated proportion for at least one of the further communication devices.

In certain embodiments, determining device status includes obtaining device status data, said device status data being at least one of: remaining battery life, mobility status, reported reliability/faults, power rating, forecast availability, subscriber status.

In certain of these embodiments, determining device status includes obtaining an indication of remaining battery life, and the first communication device may only be selected as suitable for configuration to provide the radio coverage to the at least one second communication device within the selected geographical area when the indication of remaining battery life exceeds a reference battery life level.

In certain embodiments, configuring the first communication device to provide the radio coverage includes: instructing the first communication device to establish a backhaul connection to a node in the core network; and instructing the first communication device to transmit downlink radio frames in the selected geographical area.

In certain embodiments, configuring the first communication device to provide the radio coverage may include: determining the current time of the day and/or day of the week; requesting historical data for the first communication device, said historical data including a record of device locations over a period of time; estimating the likely location of the first communication device at the current time by extrapolating from the historical data; and configuring the first communication device only when the likely location is associated with an acceptable radio coverage.

In certain embodiments, the method may further comprise: determining respective locations for the or each second communication device; and configuring the first communication device to provide the radio coverage by matching the geographical coverage area of the first communication device to the locations of at least one second communication device and instructing the first communication device to provide the radio coverage when the matched second communication devices have locations in a cell edge region of the radio coverage provided in the cellular communication network.

This last operation ensures that selected candidate aggregators are in the neighbourhood of a larger number of active communication devices and at locations further away from the cell centre than the aggregator (i.e. terminals at cell edge).

In certain embodiments, the method may further comprise determining whether a radio coverage provided by the first communication device over a selected geographical area is acceptable by: estimating the radio coverage offered by the first communication device over the selected geographical area; and generating an indication of acceptability when the estimated radio coverage offered by the first communication device coincides with a portion of the radio coverage provided in the cellular communication network that has an associated usage of network resources that exceeds a heavy usage threshold.

As a result of the above, the network is provided with a means for determining which communication devices within the network are suitable candidates for aggregator devices by virtue of the radio coverage they can offer from their location (e.g. the strength of the macrocell signal at the device location, whether the radio coverage of the aggregator device relates to geographical areas for which additional radio coverage is required, such as cell edge regions) and device status (e.g. remaining battery life, device mobility status, etc.). Where several candidate devices are present, the method allows the selection of one or more devices to be brought into service as aggregators in accordance with the requirements of network performance.

The radio coverage offered by the aggregator device may be deemed acceptable because it extends overall coverage (i.e. coverage combining the macrolayer radio coverage and any additional "aggregator coverage") and/or because it provides an alternative to the macrolayer in geographical areas where the use of the macrocell is considered particularly demanding in terms of network resource, e.g. in a cell edge region.

Where the performance of the macrolayer network includes a measure of the strength of the macrocell signal at the device location, the radio coverage criterion is a useful gauge of the acceptability of the device as a candidate aggregator because a candidate aggregator in a location in regions known or measured to have good radio coverage may be reliably predicted to have better radio conditions than might be experienced by other communication devices in other locations (such as at cell edges). Having suitable characteristics to be a candidate, the relative benefit of actually configuring any given communication device as an aggregator is then assessed before the newly configured aggregator can provide an alternative backhaul for those communication devices in comparatively poorer radio conditions. The method thus allows the identification of candidate aggregators and the dynamic activation of the aggregation functionality in certain aggregators, according to an objective test of net benefit. Once activated, the aggregators provide bridges to the cellular telecommunications network for communication devices in comparatively poor radio conditions when their activation is considered to lead to an improved network performance.

According to a further aspect of the present disclosure, there is provided a controller entity for determining functionality of communication devices in a cellular communication network including a plurality of communication devices and a macrolayer cellular communication network, the controller entity comprising a controller unit configured: to determine device status for a first communication device; to determine whether a radio coverage provided by the first communication device over a selected geographical area is acceptable; and depending upon the device status and radio coverage determinations, to select the first communication device as suitable for configuration to provide the radio coverage to at least one second communication device within the selected geographical area.

In embodiments, the controller unit may be configured to determine whether a radio coverage provided by the first communication device over a selected geographical area is acceptable by estimating the radio coverage offered by the first communication device over the selected geographical area; and generating an indication of acceptability when the estimated radio coverage offered by the first communication device improves a radio coverage provided in the cellular communication network.

In certain embodiments, the controller unit may be configured to determine whether a radio coverage provided by the first communication device over a selected geographical area is acceptable by determining whether the radio performance of the macrolayer cellular communication network provided to the first communication device is acceptable.

The controller unit may then be configured to determine whether the radio performance of the macrolayer cellular communication network provided to the first communication device is acceptable by: determining a location of the first communication device; requesting historical data for a region corresponding to the location, said data including at least one metric of the radio performance of the macrolayer cellular communication network at the region; and generating an indication of acceptability if the metric exceeds a coverage threshold.

Alternatively, the controller unit may be configured to determine whether the radio performance of the macrolayer cellular communication network provided to the first communication device is acceptable by: obtaining a measurement of the strength of radio signal from the macrolayer communication network provided to the first communication device; and generating an indication of acceptability if the measured strength exceeds a signal strength threshold.

In certain embodiments, the controller unit may be further arranged to configure the first communication device to provide the radio coverage depending upon comparison with at least one further communication device selected as suitable for configuration to provide a corresponding radio coverage to at least one second communication device in the selected geographical area.

Here, the controller unit may be further arranged to determine device status for said further communication device, to determine whether a further radio coverage provided by the further communication device over the selected geographical area is acceptable, and to select the at least one further communication device as suitable for configuration to provide the radio coverage in dependence upon the device status and radio coverage determinations; and the controller unit may perform the comparison with at least one further communication device by comparing the radio coverage provided by the first communication device with the radio coverage provided by the at least one further communication device.

Alternatively, the controller unit may perform the comparison with at least one further communication device by comparing the radio coverage area provided by the first communication device with the radio coverage area provided by a respective further communication device. In certain cases, the controller unit may then perform the comparison of radio coverage areas by estimating, for each communication device, the proportion of the corresponding coverage area that overlaps a cell edge region of the radio coverage provided in the cellular communication network; and comparing the estimated proportion for the first communication device with the estimated proportions for respective further communication devices.

Here, the controller unit may be further arranged to configure the first communication device to provide the radio coverage when the estimated proportion for the first communication device exceeds the estimated proportion for at least one of the further communication devices.

In certain embodiments, the controller unit may be configured to determine device status by obtaining device status data, said device status data being at least one of: remaining battery life, mobility status, reported reliability/faults, power rating, forecast availability, subscriber status. In certain cases, the controller unit may be configured to determine device status by obtaining an indication of remaining battery life, and the controller unit may then be configured to select the first communication device as suitable for configuration to provide the radio coverage to the at least one second communication device within the selected geographical area only when the indication of remaining battery life exceeds a reference battery life level.

In certain embodiments, the controller unit may be further arranged to configure the first communication device to provide the radio coverage by instructing the first communication device to establish a backhaul connection to a node in the core network; and instructing the first communication device to transmit downlink radio frames in the selected geographical area.

In certain embodiments, the controller unit may be further arranged to configure the first communication device to provide the radio coverage by determining the current time of the day or day of the week, requesting historical data for the first communication device, said historical data including a record of device locations over a period of time, estimating the likely location of the first communication device at the current time by extrapolating from the historical data; and configuring the first communication device only when the likely location is associated with an acceptable radio coverage.

In certain embodiments, the controller unit may further be arranged to determine respective locations for the or each second communication device and to configure the first communication device to provide the radio coverage by matching the geographical coverage area of the first communication device to the locations of at least one second communication device and instructing the first communication device to provide the radio coverage when the matched second communication devices have locations in a cell edge region of the radio coverage provided in the cellular communication network.

In certain embodiments, the controller unit may be configured to determine whether a radio coverage provided by the first communication device over a selected geographical area is acceptable by estimating the radio coverage offered by the first communication device over the selected geographical area and generating an indication of acceptability when the estimated radio coverage offered by the first communication device coincides with a portion of the radio coverage provided in the cellular communication network that has an associated usage of network resources that exceeds a heavy usage threshold.

The above aspects can be implemented within a communication device for providing an aggregator facility in a telecommunications network having a core network, CN, and a radio access network, RAN, the communication device comprising: a communication unit configured to establish an aggregation connection to at least one nearby communication device and to establish a second connection between the at least one nearby communication device and the CN, and a processor unit configured to report device status information to an aggregator controller, to receive instructions from the aggregator controller, said instructions being dependent upon performance conditions including the reported device status, and to enable the aggregation connection in accordance with the instructions.

In certain embodiments, the processor is configured to report device status information including information selected from: the location of the communication device, accuracy of the location, supported RAT technologies, supported RAT frequency bands, battery characteristics, mobility state, and/or current battery drain consumption.

In certain embodiments, the processor is configured to enable the aggregation connection by establishing an aggregation cell at a frequency band different from an operating frequency band of the RAN.

In certain embodiments, the processor is configured to enable the aggregation connection by establishing an aggregation cell using a wireless communication technology different from a wireless communication technology used by the RAN.

In certain embodiments, the processor unit is further configured to enable the second connection by enabling the communication unit, the second connection including the aggregation connection and a wireless connection between the communication device and the RAN.

Certain embodiments of the aggregation cell serve more than one nearby communication device. In these embodiments, the wireless connection aggregates a data traffic for each of the nearby communication devices into an aggregated payload, thereby making more effective use of the wireless connection.

In certain embodiments, the communication device for providing an aggregator facility corresponds to the second communication device in the system described above and may implement any of the functionalities of the equivalent second communication device in the system described above.

The above aspects can be implemented in conjunction with a method for reporting readiness of a communication device to act as aggregator in a telecommunications network having at least one controller entity, the method comprising: determining a change in location of the communication device based on two or more locations determined at temporally spaced apart intervals, the interval being a first interval; if there has been no change in location over the first interval, further comparing locations at a second interval; and if there has been no change in location over the second interval, determining that the communication device is in an aggregator-ready status and reporting the location of said aggregator-ready device. Conveniently changes in location may be determined in the communication device itself.

In certain cases, the location of the communication device is an absolute location. Conveniently, the location of the communication device may be determined using a global navigation satellite system, GNSS, such as GPS. The location of the communication device may be reported in GPS format.

In certain cases, the second interval may be set in accordance with the type of the communication device.

In certain cases, the method may further comprise determining that the communication device is not in an aggregator-ready status if there has been a change in location over the first interval; and reporting the location to the controller entity. The method may then further comprise determining location of the communication device after a third temporally spaced apart interval.

In certain cases, the method may further comprise, if there has been no change in location over the second interval, determining the location of the communication device at temporally spaced apart intervals, the interval being a fourth predetermined interval.

In certain cases, reporting the location of the aggregator-ready device may comprise reporting the location to the controller entity. Alternatively or additionally, reporting the location of the aggregator-ready device may further comprise reporting aggregator-ready status to the controller entity.

In certain cases, the method may further comprise obtaining additional information concerning the status of the communication device; and reporting the additional information to the controller entity. The additional information may conveniently include an indication of the remaining battery life of the communication device.

The above aspects may also be implemented in conjunction with a method for handling change in mobility status of a communication device that provides an active aggregator cell in a telecommunications network, the telecommunications network having a core network, at least one controller entity and a macrolayer radio access network, the macrolayer radio access network being configured to provide a backhaul connection to the core network and to provide wireless communication connections to communication devices, the method comprising: at temporally spaced apart intervals, obtaining a plurality of locations of the communication device; comparing a location determined at an earlier time to a location at a later time; if there has been no change in location, instructing communication devices having active connection to reconnect to the macrolayer, and causing the cell to bar establishment of further active connections.

In certain cases, this method may further comprise reporting that the aggregator cell is deactivated as a result of the change of mobility status.

In addition, the above aspects may be implemented in conjunction with a method in a controller entity for determining functionality of communication devices in a cellular communication network including a plurality of communication devices, the method comprising: obtaining at least one measure of the performance of the cellular communication network in a component area of radio coverage; determining from the or each measure of performance whether performance conditions in the component area of radio coverage support the activation of an aggregator facility, said aggregator facility providing radio coverage to at least one first communication device within a selected geographical area; determining from the or each measure of performance whether a net benefit is expected for the performance of the network in the component area as a result of the activation of the aggregator facility; and controlling activation of an aggregator functionality at at least one second communication device when performance conditions in the component area of radio coverage support the activation of the aggregator facility and when a net benefit is expected.

As a result, it can be determined whether an aggregator facility (i.e. an aggregator layer), in which the radio coverage offered by the macrocell is extended by the addition of radio coverage from one or more aggregators, can and should (according to some criteria) be initiated. Each second communication device that becomes an aggregator has a functionality whereby that device may provide radio coverage in addition to that of the macrocell. This aggregator functionality may be activated as a routine within a client application executing on the communication device or as a dedicated functionality, for example.

In certain cases, determining whether a net benefit is expected as a result of the activation of the aggregator facility may include determining whether the number of static first communication devices located in a portion of the component area within range of the at least one second communication device exceeds a threshold number.

In certain cases, determining whether performance conditions support the activation of an aggregator facility includes determining whether network conditions necessary for the activation of an aggregator facility hold for a given component area of radio coverage; and determining whether network conditions sufficient to support the activation of an aggregator facility hold for the component area.

In certain cases, determining whether the network conditions necessary for the activation of an aggregator facility hold includes at least one of: determining whether cell load exceeds a load threshold while throughput lies below a minimum throughput threshold; determining whether the number of users in a region of the cell exceeds a user number threshold while throughput for a given application falls below a minimum throughput threshold; determining whether a happiness metric lies below a happiness threshold; and/or determining whether the usage of control resources exceeds a control resource threshold.

In certain cases, the network conditions sufficient for the activation of an aggregator facility depend upon the level of at least one of the following parameters: the number of communication devices in the component area of radio coverage; the number of communication devices in the component area of radio coverage having activated aggregator functionality; signal to interference plus noise ratio, SINR; path loss/received signal received power, RSRP; the available radio access technologies, operational frequency bands and/or carriers; location information of the communication devices; mobility information of the communication devices; and predicted device power profile for the at least one communication devices.

In certain cases, the at least one second communication device is one of: a user equipment (UE); a machine type communication (MTC) device; a repeater; a relay unit; an access point; wireless station; small cell station; or a dedicated aggregator facility communication device.

In certain cases, determining whether a net benefit as a result of the activation of the aggregator facility is performed on a macrocell basis for at least one macrocell within the cellular telecommunications network.

In addition, the above aspects may be implemented in conjunction with a method in a controller entity for determining functionality of communication devices in a cellular communication network including a plurality of communication devices, the plurality of communication devices including one or more candidate aggregator devices, the method comprising: obtaining information relative to candidate aggregator devices in a given area of radio coverage; for each of a plurality of subsets of the candidate aggregator devices, estimating a corresponding expected gain based on the obtained information, wherein the expected gain is a difference between an estimated value of a first measure of performance of the network after activation of an aggregator functionality in said subset of candidate aggregator devices and a first measured value of the first measure of performance of the network before activation of an aggregator functionality in any of the plurality of subsets, and wherein the aggregator functionality provides radio coverage to at least one first communication device within a selected geographical area; and activating an aggregator functionality in at least one subset selected from the plurality of subsets based at least in part on their corresponding expected gains.

Examples of the techniques used to obtain the estimated value of the first measure of performance of the network include: estimation by temporary activation of the aggregator functionality (whether complete or partial activation of the aggregator functionality is performed); and estimation which requires no activation of the aggregator functionality (for example using a modelling or inference technique to interpolate or extrapolate from known historical or other related indirect measurements).

In certain cases, the method may further comprise: maintaining the aggregator functionality activated in the at least one selected subset if a second measured value of the first measure of performance of the network after activation of the aggregator functionality in the at least one selected subset is higher than said first measured value.

It is noted that one or more of the subsets of the candidate aggregator devices could have a single candidate aggregator device as a member. Often, however, there are likely to be a plurality of such candidate aggregator devices in each subset considered.

In certain cases the method may further comprise: choosing a selection algorithm for use in selecting the at least one subset based on a type of the obtained information.

As a result, the aggregator selection algorithm used may be chosen to suit the available type of information relative to candidate aggregator devices in the given area of radio coverage obtained.

In certain cases, the expected gain for each subset is estimated by: obtaining the first measured value by measuring said first measure of performance of the network before activation of an aggregator functionality in any of the plurality of subsets; and for each candidate aggregator device in the subset, calculating the estimated value of the first measure of performance of the network for a case where the device provides an active aggregator functionality, and calculating a difference between the estimated value and the first measured value of the first measure.

Alternatively, the expected gain for each subset is estimated by, obtaining the first measured value by measuring said first measure of performance of the network before activation of an aggregator functionality in any of the plurality of subsets; and for each subset, calculating the estimated value of the first measure of performance of the network for a case where each of the devices in the subset provides an active aggregator functionality, and calculating a difference between the estimated value and the first measured value of the first measure.

In certain cases, the subset in which the aggregator functionality is activated is selected by: evaluating the expected gain for each subset; and selecting a subset having a required expected gain. Here, the evaluation of the expected gain may comprise calculating which of the at least one subsets provides the greatest expected gain, and wherein the selection of the subset having the required expected gain comprises selecting the subset that provides the greatest expected gain.

Alternatively, the evaluation of the expected gain may comprise calculating which of the subsets requires fewest changes in aggregator devices from the aggregator devices currently providing the aggregator functionality, and wherein the selection of the subset having the required expected gain comprises selecting the subset that requires fewest changes in aggregator devices, the estimated expected gain exceeding a threshold gain value.

In a further case, the evaluation of the estimated expected gain may comprise modelling performance of the network with the selected subset activated and comparing that modelled performance information to the measured performance of the network before activation of an aggregator functionality.

In certain cases, if the second measured value of the first measure of performance of the network does not exceed the first measured value, the method may further include: controlling the or each candidate aggregator device having an active aggregator functionality to deactivate the aggregator functionality.

In certain cases, activating the aggregator functionality in the at least one selected subset may include, for the or each candidate aggregator device in the selected subset, controlling the respective device to activate the active aggregator functionality.

In certain cases, the method may further comprise obtaining a third measured value of a second measure of performance of the network before activation of an aggregator functionality in any of the plurality of subsets; and maintaining the aggregator functionality activated in the at least one selected subset if a fourth measured value of the second measure of performance of the network after activation of the aggregator functionality in the at least one selected subset is higher than the third measured value.

In such cases, the second measure of performance used in determining whether to maintain an already active aggregator functionality may thus differ from the first measure used to determine whether the aggregator functionality should be activated in the first instance.

In certain cases, the method may further comprise updating the selection of candidate aggregator devices, at spaced-apart intervals of time, by: obtaining a further measured value of the measure of performance of the network; for each subset of the candidate aggregator devices, estimating an updated corresponding expected gain; selecting at least one of the subsets based at least in part upon their corresponding updated expected gain; activating an aggregator functionality in each selected subset; and maintaining the active aggregator functionality if the further measured value of the measure of performance of the network exceeds a reference value of said measure. Here the method may further comprise, before estimating the updated expected gain, changing the configuration of the active aggregator functionality in response to the further performance information.

In certain cases, the reference value may be a value of said measure averaged over a plurality of historical measurements. Alternatively, the reference measured value may be a value of said measure selected from any one of N further measured values of said measure obtained in the N most recent update operations.

In certain cases, each candidate aggregator device may be a communication device that fulfils at least one criterion selected from: sufficient battery life; location within a portion of the given area of radio coverage for which the aggregator functionality is expected to be required; and current path loss metric for the communication link between the communication device and the cellular communication network falls below a path loss threshold.

Examples of communication device may include one of a user equipment (UE); a machine type communication (MTC) device; an access point; wireless station; and/or small cell station.

In respective cases, the given area of radio coverage may be selected from: a macrocell coverage area for at least one macrocell within the cellular telecommunications network; a coverage area for at least one sector within the macrolayer of the cellular telecommunications network; and the coverage area of the entire cellular telecommunications network.

The above aspects may also be implemented in conjunction with a method for determining functionality of communication devices in a cellular communication network including a plurality of communication devices, the plurality of communication devices including one or more candidate aggregator devices, the method comprising, at spaced-apart intervals of time: estimating an expected gain for each of a plurality of subsets of the candidate aggregator devices, the estimate being based on information relative to candidate aggregator devices in a given area of radio coverage, wherein the expected gain is a difference between an estimated value of a measure of performance of the network after activation of an aggregator functionality in said subset of candidate aggregator devices and a current measured value of the measure of performance of the network, and wherein the aggregator functionality provides radio coverage to at least one first communication device within a selected geographical area; activating an aggregator functionality in at least one subset selected from the plurality of subsets based at least in part on their corresponding expected gains; and maintaining the activated aggregator functionality in the at least one selected subset if the current value of the measure of performance of the network exceeds a reference value of said measure.

The above aspects may be implemented within a system for providing an aggregator facility in a telecommunications network; the system comprising: a core network, CN; and a radio access network, RAN, which is configured to provide a backhaul connection to the CN and to provide wireless communication connections to radio communication devices; wherein the system further comprises: a first communication device, the first communication device having a first connection to the CN, the first connection path including a wireless connection between the RAN and the first communication device; a second communication device; and an aggregator controller, which communicates with the RAN and the CN and which is configured to instruct the second communication device to establish an aggregation connection to the first communication device and a second connection between the first communication device and the CN, wherein the second connection included the aggregation connection and the instruction is dependent upon performance conditions.

The second connection may be used instead of the first connection to the CN; alternatively the second connection may be used in addition to the first connection to the CN.

In certain embodiments, the aggregation connection is a wireless connection.

In certain embodiments there are a plurality of first communication devices. Where there are more than one first communication device, the aggregation connection transports aggregated data from the first communication devices, the data from each first communication device being packetized for backhaul to the core network.

In certain embodiments, the second communication device may be a user equipment (UE) whose user has indicated that the UE may be dynamically assigned to act as an "aggregator".

In certain embodiments, the second connection further includes a second wireless connection to the RAN and the backhaul connection from the RAN to the CN. Where the second communication device is a user equipment (UE), the second wireless connection may be established using a SIM card specific to that device to authenticate the device to the CN.

In certain alternative embodiments, the second connection further includes a connection using at least one connection technology selected from: optical fibre cable technologies; Ethernet technologies; a fixed line xDSL technology; microwave backhaul technology; and/or a Wi-Fi technology. In the case of Wi-Fi technology, the connection may thus comprise a Wi-Fi section from second communication device to a Wi-Fi access point and a fixed line section from the Wi-Fi access point to the core network. Fixed line xDSL and optical fibre connections may be either direct or indirect; in the indirect case, the connection may be established via at least one intervening network entity.

In certain embodiments, the second communication device may be a dedicated communication device specifically deployed to act as an aggregator. Alternatively or additionally, the second communication device may be a small cell base transceiver station, for example, a home eNodeB (HeNB).

In certain embodiments, the aggregator controller is independent of the RAN. The controlling functionality (which could be implemented, for example, as a software) is thus placed in an entity that is typically external to the eNodeBs. This external entity is configured to establish a communication channel with selected terminals (or other communication devices) that are capable of acting as aggregators for other terminals in the network. When each of these selected terminals acts as aggregators for one or more other terminals in the network, the latter are connected to the CN via a secondary connection which is different from the primary connection they would have when connected with the CN via the RAN. These connections are primarily logical connections between the terminals and the CN. The secondary connection will include a communication channel between the selected terminal and the one or more other terminals in the network for which the selected terminal acts as an aggregator (hereafter, we will call the selected terminal "aggregator"). The aggregator will communicate with each of these other terminals and combine their communication streams before they are transmitted to the Core Network. In certain cases, the external entity is configured to establish further parallel communication channels with other communication devices: this may be useful when determining the locations of communication devices more generally rather than candidate aggregators alone, as may be needed in certain embodiments.

As a result, the system may be deployed without requiring bespoke adaptations of otherwise conventional eNodeBs to include dedicated software functionalities. The introduction of a separate controller entity means that the system may be implemented in association with any conventional macrocell layer deployment.

Furthermore the system requires neither changes in network architecture nor new stricter requirements in synchronization, backhaul, etc.

As a user may obtain (and to some extent control the positioning of) candidate aggregators, the users of the network may also benefit in that they are able to influence the overall coverage of the macrolayer by their own actions. In some instances, an aggregator placed close to a window (whether outdoors or indoors), can provide improved coverage indoors to UEs, giving a better link budget.

The use of such aggregator facility systems may have an advantage for legacy communication devices since they would gain access to potentially more up-to-date equipment in the deployed aggregator controller, thereby improving performance of such low-tier terminals in connecting to the macrolayer through the aggregator.

Location services may also benefit from the availability and/or presence of aggregator devices as each aggregator may be used as a further means to discover the positions of respective communication devices, thereby improving location accuracy.

In certain embodiments, the performance conditions upon which the instruction to the second communication device to establish the second connection depends include a metric of coverage quality and/or usage of resources in the network being greater than a threshold level. This metric may be a metric of a level of interference in the network. In particular, this level of interference may be one due to the use of the first connection. The threshold level is an estimate (which can be predetermined) of a level of interference due to the use of the second connection.

In certain embodiments, the instruction to establish an aggregation connection may be conditional upon performance conditions associated with the second communication device. This may be in addition to the metric discussed above. The performance conditions associated with the second communication device may include parameters associated with the connection between the second communication device and the RAN. The performance conditions associated with the second communication device may include at least one of SINR, received signal received power (RSRP), location information, and battery life.

In certain embodiments, the aggregator controller may be further configured to process the performance conditions associated with the second communication device and, only if the parameters are determined to indicate that the second communication device is a candidate for assignment as an aggregator, to instruct the second communication device to establish the aggregation connection to the first communication device

In addition, the above aspects may be implemented in conjunction with a controller entity for controlling an aggregator facility in a cellular telecommunication network, wherein the network has a core network, CN, and a radio access network, RAN, and serves at least one first communication device, the controller entity comprising a network interface unit configured to provide an interface to the CN and controller unit configured: to obtain performance condition information for a region of the telecommunication network, to determine whether a second communication device provides aggregator functionality to said at least one first communication device, and to instruct the second communication device to establish an aggregation connection to the first communication device in dependence upon the determination.

In certain embodiments, the performance conditions include conditions associated with a communication link between the or each first communication device and an eNB in the RAN, and the controller unit is configured to determine whether a second communication device provides aggregator functionality by determining whether the performance conditions match trigger conditions.

In certain embodiments, the controller unit is configured to instruct the second communication device to establish an aggregation connection by assigning a second communication device to operate in the aggregator mode, upon receipt of an indication that performance conditions match the trigger conditions, and commanding the first communication device to switch at least a portion of its data link from the eNB to the second communication device in aggregator mode, wherein aggregator mode is a mode in which the second communication device is configured to aggregate data traffic from one or more of said first communication devices.

In certain embodiments, the performance conditions include conditions related to the location of one or more second communication device and the controller unit is further configured to obtain performance condition information repeatedly at time intervals and to determine whether a second communication device provides aggregator functionality on successive occasions in dependence upon the performance condition information thus obtained, thereby updating the determination. In certain embodiments, the conditions related to the location of one or more second communication device indicate whether each second communication device is static for a duration sufficient to allow effective aggregator functionality.

In certain embodiments, the controller unit is configured to activate the network interface unit in dependence upon the performance condition information, thereby activating an aggregator layer in the telecommunication network. In certain embodiments, the processing means is configured to deactivate the network interface unit in dependence upon the performance condition information, thereby deactivating an aggregator layer in the telecommunication network.

In certain embodiments, the performance condition information includes location information for the at least one first communication device and the controller unit is further configured to determine whether a second communication device provides aggregator functionality in dependence upon the location information for the at least one first communication device.

In certain embodiments, the controller entity corresponds to the aggregator controller in the system described above and may implement any of the functionalities of the aggregator controller in the system described above.

Use of a separate controller entity means that dynamically configured communication devices need not be rigidly addressed through the hierarchical structures of the radio access network and/or the core network. Communication devices in regions of the network architecture governed by different radio network controllers or eNodeBs may be dynamically controlled together to offer a more responsive overall coverage to other communication devices. Coverage extension may more easily transcend the region (i.e. sectors or cells) in which the controlled communication devices currently operate.

Furthermore the separation of the controller entity from the core and radio networks means that the controller entity may be implemented in association with any conventional macrocell layer deployment.

There is further provided computer software operable, when executed on a computing device, to cause one or more processors to perform a computer implemented method according to the above aspects of the present disclosure.

A further aspect provides machine-readable storage storing such a program.

Various respective aspects and features of the present disclosure are defined in the appended claims.

It is an aim of certain embodiments of the present disclosure to solve, mitigate or obviate, at least partly, at least one of the problems and/or disadvantages associated with the prior art. Certain embodiments aim to provide at least one of the advantages described below.

### Brief Description of the Drawings

Various embodiments of the present disclosure will now be described with reference to the accompanying drawings, in which:
Figures 1A to 1C illustrate an exemplary network architecture in which certain embodiments of the present disclosure may be deployed; here, communication devices are dynamically assigned as aggregators within a single cell;
Figures 2A and 2B illustrate an alternative, exemplary network architecture in which certain embodiments of the present disclosure may be deployed; here, communication devices are dynamically assigned as aggregators within a multicell network;
Figure 3 illustrates the functional elements of an aggregator controller suitable for enabling, controlling and disabling an aggregator layer in the network architecture of Figures 1A, 1B, 1C, 2A and 2B;
Figure 4 illustrates the behaviour of nearby communication devices when the aggregator controller of Figure 3 enables an aggregator layer at a given aggregator;
Figure 5 illustrates the functional elements of a communication device suitable for use in the network architecture of Figures 1A, 1B, 1C, 2A and 2B;
Figures 6A and 6B illustrate certain operations of a controller entity in determining whether activation of an aggregator facility is supported;
Figure 7 shows a flowchart showing certain operations of a communication device associated with mobility status;
Figure 8 shows a flowchart showing certain further operations of a communication device associated with mobility status;
Figure 9 shows a flowchart illustrating exemplary operations of a method for determining communication device functionality in accordance with the present disclosure;
Figure 10 shows a flowchart illustrating exemplary operations of an alternative method for determining communication device functionality in accordance with the present disclosure;
Figure 11 shows a flowchart illustrating further exemplary operations of a further method for determining communication device functionality in accordance with the present disclosure;
Figure 12 shows a flowchart illustrating further exemplary operations of a further alternative method for determining communication device functionality in accordance with the present disclosure;
Figure 13 illustrates the use of EPS bearer as a transport layer for connectivity between an aggregator device and the core network; and
Figure 14 illustrates a variation upon the arrangement in Figure 13.

### Detailed Description of Preferred Embodiments

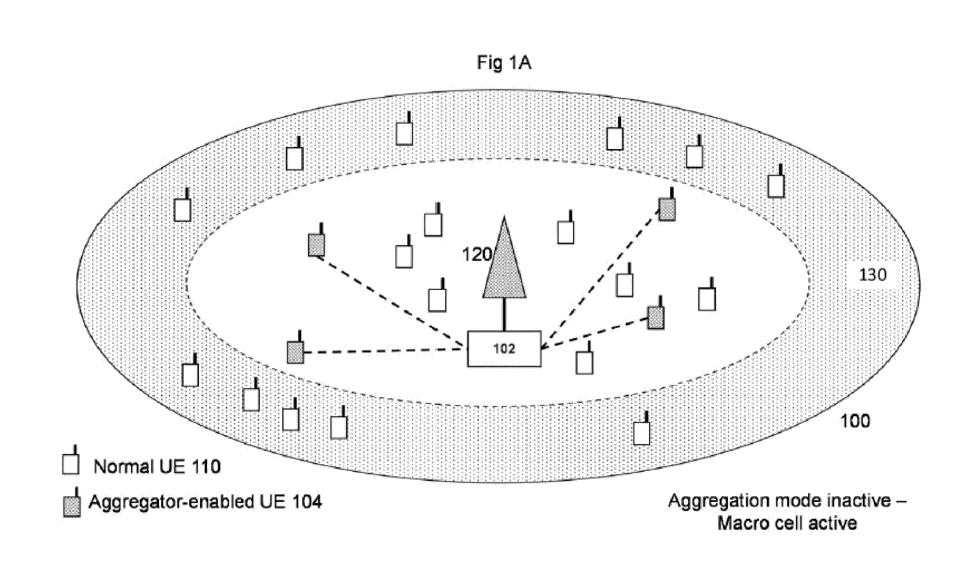

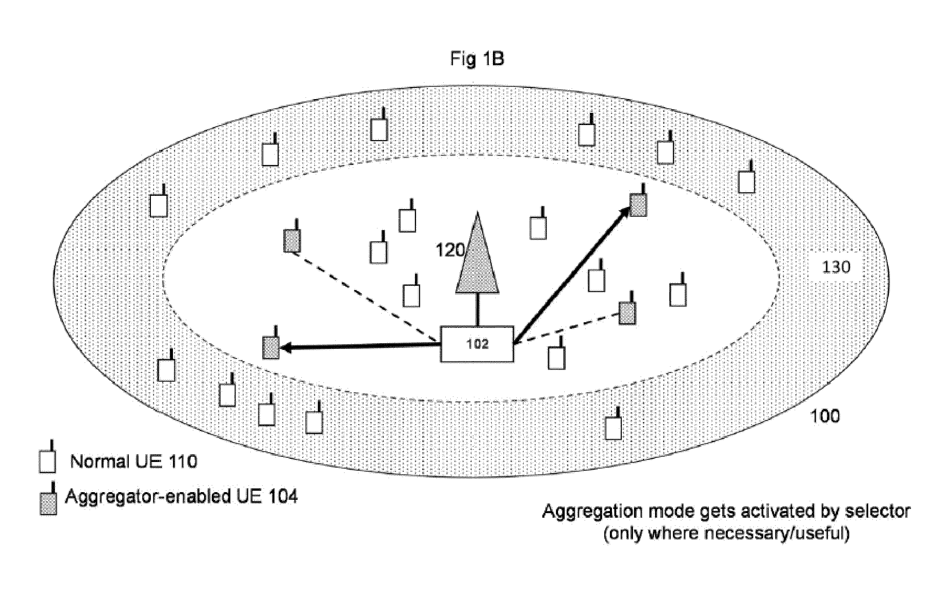

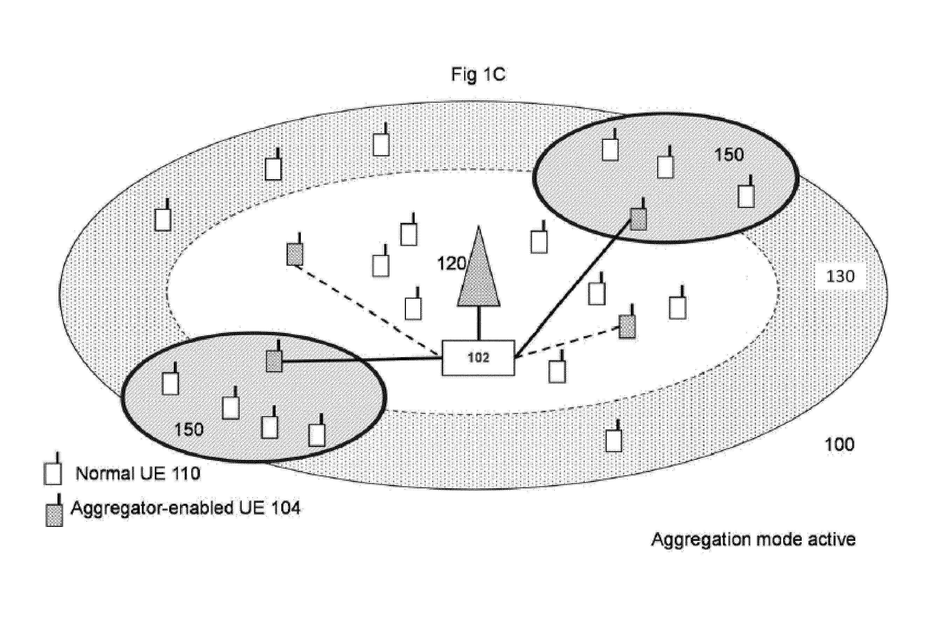

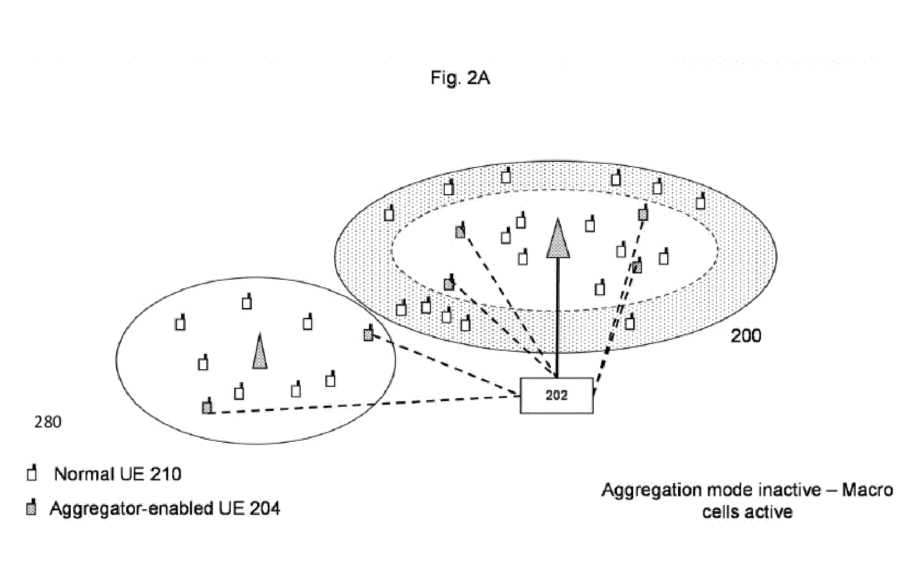

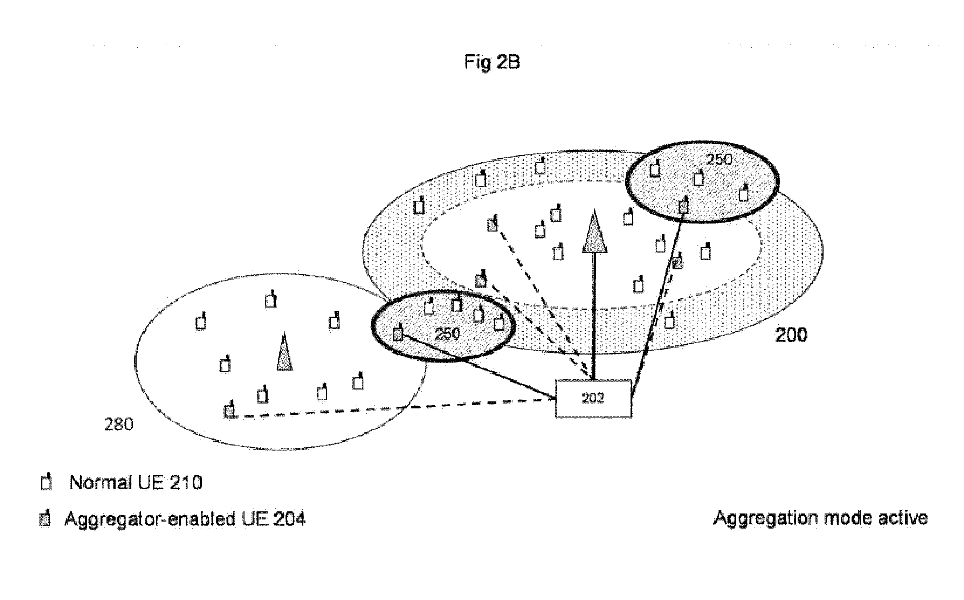

The present disclosure relates to a method of operation of a telecommunications network architecture that includes a radio access network (RAN), a core network (CN) and a packet data network (PDN). Communication devices, such as mobile terminals, user equipment (UEs) and wireless access stations, establish wireless connections to the network by means of the RAN, as illustrated in Figures 1A, 1B, 1C, 2A and 2B.

Figures 1A to 1C show a single cell 100 of the telecommunications network provided by a base transceiver station (i.e. macro eNB) 120 within the RAN. The telecommunications network architecture further comprises a network node, referred to as an aggregator controller (AC) 102, which communicates with the RAN and the CN (illustrated here as a link between the AC 102 and the eNB 120) but which may be implemented independently of the component entities of either RAN or CN.

The AC 102 identifies at least one communication device 104 as candidate for assignment as an aggregator. The AC 102 also instructs any given aggregator candidate 104 to activate (or deactivate) an aggregator mode, whereby it provides base station functionality for nearby (mobile) communication devices 110: in Figure 1C, each activated, aggregator-enabled communication device 104 provides a respective aggregator cell 150. The AC 102 also determines whether any aggregator candidate 104 is activated at all at a given time in a given region of the telecommunications network. In Figures 1A to 1C, candidate aggregators 104 are illustrated as UEs: this is merely one example of a suitable communication devices 104, candidate aggregators may equally be dedicated communication devices or even small cell base transceiver stations such as HeN Bs or femtocell eN Bs.

The AC 102 is configured to interrogate one or more communication devices 104, where these devices are connected to the RAN (i.e. the eNB 120), to determine certain parameters associated with the device 104 and/or its connection to the RAN (e.g. SINR, reference signal received power (RSRP), receive signal code power (RSCP), location information, battery life, etc.). Data associated with the parameters is processed at the AC 102 and, if the parameters are determined to indicate that the or each communication device 104 is a candidate for assignment as an aggregator, the communication device 104 may be configured to implement an aggregator mode, whereby it provides base station functionality for nearby (mobile) communication devices 110.

Figures 1A to 1C also illustrate one scenario where the facility extending base station functionality to nearby (mobile) communication devices 110 is contemplated. As communication devices approach the furthest range of macrocell coverage in the cell (i.e. the cell edge, illustrated as shaded area 130), they consume more network resource. By selecting certain communication devices to act as aggregators, these devices being within good macrocell coverage but having the facility to extend base station functionality within an "aggregator cell" beyond the coverage of the macrocell layer, the network can deploy aggregators to address the problems of cell edge.

Certain network-connected communication devices 104 are thus used as a type of small cell entity. Network-connected communication devices assigned to perform this small cell-like functionality are termed "aggregators" because, where there are more than one communication devices 110 nearby a given network-connected communication device 104 in aggregator mode, the data traffic from the nearby communication devices 110, for each of the nearby communication devices 110, is buffered for transport (i.e. "aggregated") using a backhaul connection between the aggregator 104 and the core network. By aggregating the data from one or more nearby communication devices 110, the aggregator can both (a) assist in extending the network coverage to locations where (i) the macrolayer coverage is otherwise either temporarily or permanently inadequate or (ii) the macrolayer coverage is adequate but devices within a certain coverage area (e.g., cell edge) consume too many resources and (b) transport data over the RAN more efficiently. One of the advantages of buffering data from the nearby communication devices 110 is that the backhaul connection from the aggregator 104 (which may be considered as a single logical "pipe") can be made less "bursty" reducing signal resource consumption and reducing the overhead of the signalling.

Aggregators are typically, dynamically switched-on and off in dependence upon conditions affecting the performance of the network. These performance conditions include both network conditions (such as interference, load, etc.) and other conditions that could affect the performance of the system (such as the predicted level of activity in the cell at a given time or date, the presence and/or number of candidate aggregators in suitable locations, the distribution of UEs in cell edge locations, and/or the level of resource consumption by communication devices in the potential coverage area of respective candidate aggregators).

In certain cases, the coverage of the existing macrolayer is used for backhaul and a technology/band different from the one used for the backhaul is used as a radio interface for extending the coverage to nearby (mobile) communication devices 110. The coverage extension is therefore supplied to nearby communication devices 110 by aggregators operating "out-of-band" with respect to the macrolayer operating frequencies.

In one example, the macrolayer operates using LTE carriers at frequency bands around 800MHz or 1800MHz while the cell 150 provided by the aggregator to nearby communication devices operates at 2600MHz. In another example, the macrolayer operates using LTE carriers at frequency bands around 2600MHz using an FDD technology while the cell extension provided by the aggregator to nearby communication devices operates at 2600MHz in a TDD technology. Furthermore, the reader will appreciate that further out-of-band frequency bands may be available at frequencies for which no licence is needed, such as the 2.4GHz and 5GHz bands used by conventional WiFi technologies (i.e. compliant with the IEEE 802.11 family of standards) or in the near infrared and visible light spectrum used by light communications technologies such as visible light communications, VLC (sometimes referred to as "Li-Fi").

Aggregators (and candidate aggregators) may be fixed in a single location much as conventional small cell base station transceivers are: determining or obtain a location for such devices is essentially a matter of checking that this fixed status has not been altered. Equally and without loss of generalisation, it will be appreciated that in many instances aggregators (and candidate aggregators) are themselves mobile. While in certain embodiments, it is a requirement that the aggregator is static when active, it is also contemplated that the aggregator may be moved to another site and activated at the new site - such communication devices are referred to as "nomadic", as distinct from "fixed" devices. One specific example of a nomadic device arises when the candidate aggregator is installed in a motor vehicle, such as a commuter's car: the vehicle is driven from a home location (where it may be static) to an office location (where, after the journey is complete, the device may again be unmoved throughout the working day).

The AC 102 is a central logical entity (e.g. a server), which may or may not be integrated within the elements of the 3GPP Radio Access Network. The AC 102 monitors conditions affecting the performance of the network to assist in deciding which UEs 104 (or other network-connected communication devices) will act as aggregator.

Certain implementations of the AC 102 obtain information from all network-connected communication devices in a given sector before determining which of these devices can act as aggregators by virtue of the device status and current location. This determination is repeated for respective sectors at intervals of time: in certain cases, the intervals are equal in duration, while in others, the intervals are of variable duration and may be adapted to the known or predicted behaviour of communication devices using the network.

The AC may further repeatedly determine whether, on a set of basic criteria (i.e. performance conditions such as the network conditions, the current location and status of communication devices, etc.), any devices in a given sector should enter into service as aggregators at all. The criteria may include a measure of the comparative benefit of introducing an aggregator facility compared to having no aggregator facility in a given sector.

The AC is capable of establishing, maintaining and deactivating communications with the candidate aggregators, i.e. those UEs or other network-connected communication devices determined to have the capability to act as aggregators. This capability (provided through an application layer carried over the user plane of the macro layer, for example) allows the AC to:
- obtain information from all the UEs that can act as aggregators 104, this information may include performance factors such as location and its accuracy, supported RATs and related technologies (such as conventional WiFi technologies, VLC technologies, etc.), supported operational frequency bands, battery characteristics, status, and current battery drain consumption; and/or
- provide commands to the aggregators 104 such as: commands to set-up an aggregator control layer using some specific algorithm depending upon performance conditions such as those obtained from the aggregators 104, to select the RAT/band to be used in such a layer, to start transmission, to send handover commands to the aggregated UEs (i.e. the nearby communication devices 110 served by the aggregators 104), to stop transmission, and/or to send information to the aggregator control layer.

In certain implementations, the AC 102 might communicate with the LTE eNodeB or 3G RNC in order to "move", via handover to a specific RAT/frequency, a terminal (or other communication device) that is set to act as an aggregator 104. This move may be a change in serving cells: in such cases the communication with the LTE eNodeB or RNC is a request for a handover of the aggregator 104 from a current cell to a neighbouring cell: communication with the eNodeB or RNC is necessary then since handovers are under the control of the LTE eNode (for 3G, the control is done by the RNC). The move might also be a forced reselection: in which case communication with the LTE eNodeB would be unnecessary.

In certain implementations, the AC 102 may establish a further direct communication with "normal" UEs 110 (i.e. those communication devices not currently assigned to act as aggregators). This direct communication may be through a preinstalled application, for instance, configured to gather further performance information such as the strength/quality of received signals in the cell 100 in which the normal UEs 110 are camped/connected, and/or data on the strength/quality of received signals in other RATs/band, and/or location information. In such cases, the AC acts as an application server for the aggregator client application - with information being "pushed" and/or "pulled" using conventional application layer commands, such as HTTP PUSH and HTTP PULL.

In certain implementations, the aggregation enabled communication devices 104 (i.e. aggregators or candidate aggregator devices) are also relay nodes. Such devices may transfer data for one group of network-attached communication devices as a conventional relay node, while serving another group of network-attached communication devices as an aggregator.

The aggregator 104 is distinct from a typical relay node in a number of respects. Firstly, relay nodes are tied to a particular donor cell. They are presumed to be static and entirely under the control of the network operator via the eNB providing the donor cell. Furthermore, relay nodes are typically operated using radio resources allocated to them by the donor cell and are thus integrated in the scheduling for the macrocell. In logical terms, a connection from a communication device to the core network via a relay node is the same logical connection as that between the communication device and the core network via the donor eNB: resource that would be allocated within the macrolayer for the direct connection from communication device to eNodeB is instead allocated to the indirect connection via the relay unit.

The macrolayer (i.e. provided by eNB 120) and the aggregator 104 provide separate logical connections between the Core Network and communication device 110, with the aggregator 104 being "configurable" to provide this connection. Whereas the relay node provides an alternative physical route provided the communication device camps on the relay cell rather than the donor cell, the AC 102 ensures that the network can control whether a given candidate (or group of candidates) for aggregator is enabled (i.e. enters into service as an aggregator) and thus determines the conditions under which the communication device switches between a connection established by the RAN and a connection established by the aggregator (when instantiated).

Figures 2A and 2B illustrate a further radio access network where certain communication devices are dynamically assigned as aggregators within a multicell network. This scenario demonstrates that the aggregator is not however merely a "temporary" base transceiver station. As the aggregator is activated and deactivated *ad hoc* (i.e. opportunistically) based on the need of the RAN as a whole, it is contemplated that certain communication devices 204 camped on neighbouring cells 280 could be assigned aggregator status: in Figure 2B, each activated, aggregator-enabled communication device 204 provides a respective aggregator cell 250.

Such aggregators 204 can be arranged to provide more effective base station functionality to communication devices in the cell 200 currently serving a conventional communication device 210. While that aggregator 204 would normally be outside the reach of the serving cell 200, it can nevertheless be activated, via the AC 202.

As the AC 202 need not be associated specifically with a given cell 200, but rather with a network that may include a plurality of cells (200, 280), the AC 202 is adapted to view the network holistically. By activating aggregator facilities 204 that sit outside the (macrolayer) coverage of a cell 200 yet still serving communication devices 210 within that cell 200, the AC 202 may still deliver an overall benefit to the network.

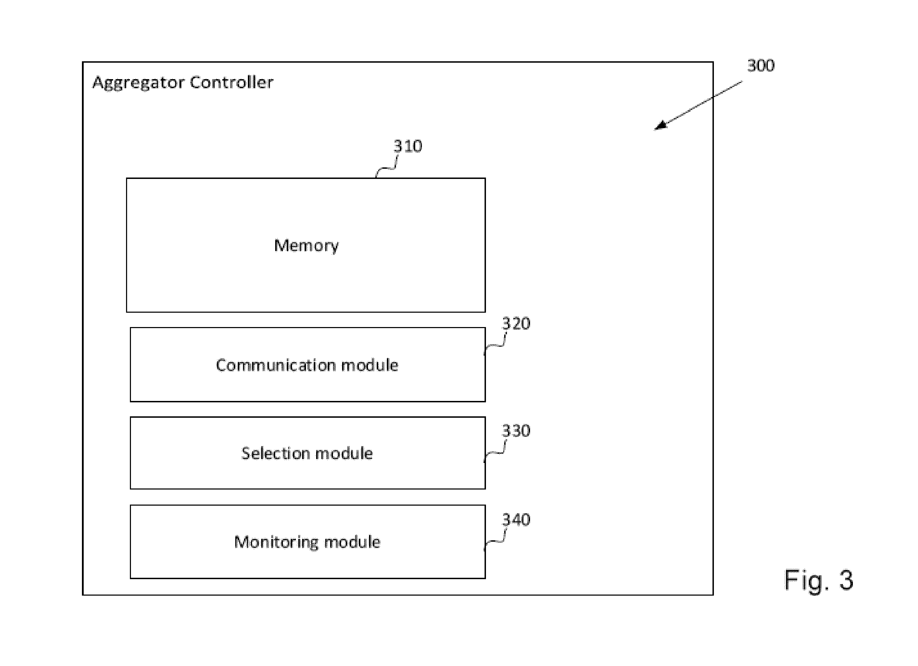

Figure 3 illustrates the functional elements of an aggregator controller 300 suitable for enabling, controlling and disabling an aggregator layer in the network architecture of Figures 1A, 1B, 1C, 2A or 2B. These functional elements may be implemented as software routines and/or as dedicated hardware units, these elements being substantially interchangeable.

The functional elements include a communication module 320 for obtaining information from potential aggregators by establishing communication via an application layer with these devices. The information obtained contributes to the factors affecting the performance of the network upon which the establishment of a connection between aggregators and nearby communication devices depends and may include: current location (e.g. location information derived from global or regional satellite positioning systems, such as Global Positioning System, GPS, GLONASS, BeiDou/COMPASS, IRNSS or Galileo); historical information (covering, for example, the last two weeks) of the location of the candidate aggregator; level of physical mobility at present (i.e. whether moving or not); a measure of LTE radio coverage in the macrolayer; an indicator of battery level, current consumption, expected remaining battery etc.; information concerning neighbour cells of the aggregator, in respect of the connection between the aggregator and the macrolayer RAN; and a measure of the improvements (or otherwise) expected, after switching on an aggregator layer in a specific region of the radio network, the improvements being measured in terms of latency (i.e. data waiting time), for example. This information may be made available in the application layer through an aggregator client application executing on the respective aggregator candidate devices.

One reason for obtaining such information relates to the nature of the devices that are candidates. It is likely that many of the candidate aggregators are in fact "nomadic", changing (i.e. commuting) between two or more static locations over a period of hours or days. Thus for many candidate devices the characteristics of the network will change as they move within the network: a communication device that is a suitable candidate aggregator at a given location, X, and a given time, T, may not be suitable elsewhere, X + x, at a later instant, T + t: specifically if the location is close enough to extend an aggregator cell to the (macrolayer) cell edge at T, but out of range of the cell edge at T + t. Thus the controller 300 needs to obtain this information to inform decisions as to whether the communication device is (currently) a candidate aggregator and whether, if a candidate aggregator, it should be activated/deactivated as an aggregator.

Historical data can be used to provide a measure of the likelihood that a given candidate aggregator will remain static. If the device is embedded in a vehicle, and it is 3pm on a Wednesday, historical data that indicates that that vehicle is typically in the same position every weekday (Monday to Friday) between 10am and 5pm, confirms that the candidate aggregator is not only currently static, but is also expected to remain static. As a result, this candidate aggregator may be considered a better candidate when compared to devices in a similar location, with similar radio performances, and with similar battery life, that are static but that have never been before in that location.

Optionally, the communication module 320 may be configured to obtain additional information from communication devices other than aggregators; this additional information being analogous to the information obtained from candidate aggregators and similarly contributing to the factors affecting the performance of the network upon which the establishment of a connection between aggregators and nearby communication devices depends. A specific non-aggregator client application may be installed in some or all of the communication devices within a network to provide this additional information.

The communication module 320 may also be configured to obtain macrolayer information (i.e. data concerning network conditions) from the macrolayer concerning the current level of resource consumption of the schedulers, coverage maps and (if available) real time traffic maps.

The functional elements include a selection module 330 for selecting (and communicating to) the aggregators that have to start the transmission of an aggregator cell and for determining which of the supported technology/frequency bands the selected aggregators is to use in operation.

A monitoring module 340 is also provided to evaluate performance conditions (such as the network conditions and other conditions affecting performance) to determine which of the currently selected aggregators will continue their transmission.

In cases where a change in aggregator is indicated by the monitoring module 340, the selection module 330 may be further configured to select (and communicate to) those aggregators which should stop their transmission (and thereby cease to be in service as an aggregator).

When enabling an aggregator layer in a given sector or cell of a radio network, the aggregator controller first instructs one or more communication devices (preselected to act as aggregators) to start radiating coverage (i.e. to implement an aggregator "cell").

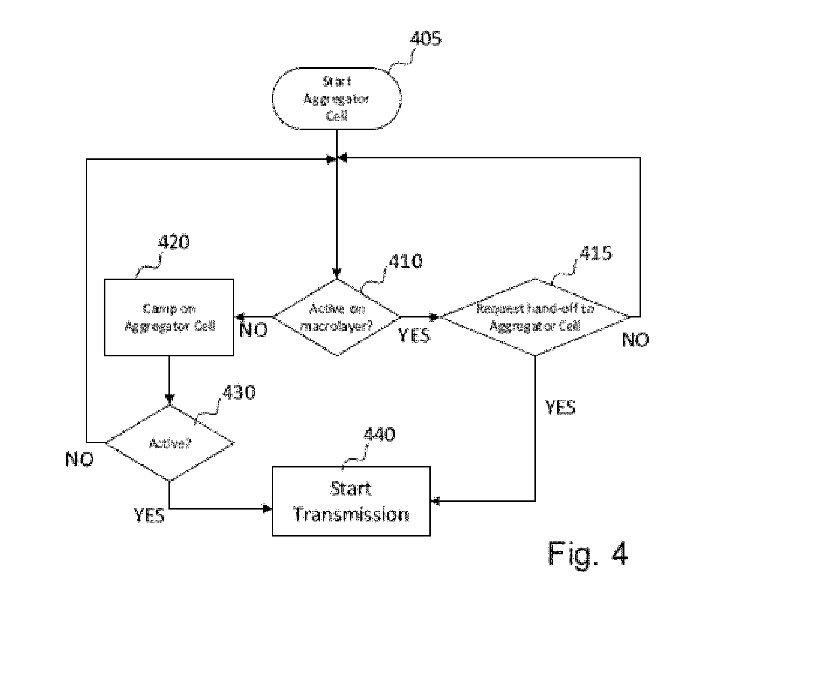

In Figure 4, the activity of communication devices nearby an active aggregator are illustrated. Once a given aggregator starts radiating coverage to its own cell 405, the behaviour of nearby communication devices adapts accordingly.

Nearby communication devices (i.e. terminals, such as UEs) that are in idle mode will automatically camp on the newly established aggregator cell 420 (by virtue of the conventional idle mode reselection of the cell with the strongest signal strength coupled with the prioritization of LTE layers broadcast by the LTE eNodeB). If the nearby idle device thereafter enters an active mode 430, transmission starts (or does not start) over the aggregator cell 440. Where there is an ongoing existing connection through the macrolayer of the RAN (i.e. it is determined that the nearby communication device is active on the macrolayer) 410, the RAN may optionally, upon request from the aggregator controller, move (i.e. hand-off) the ongoing communication of the respective nearby device towards the aggregator cell 415. If such a request is made, transmission starts (or proceeds) over the aggregator cell 440.

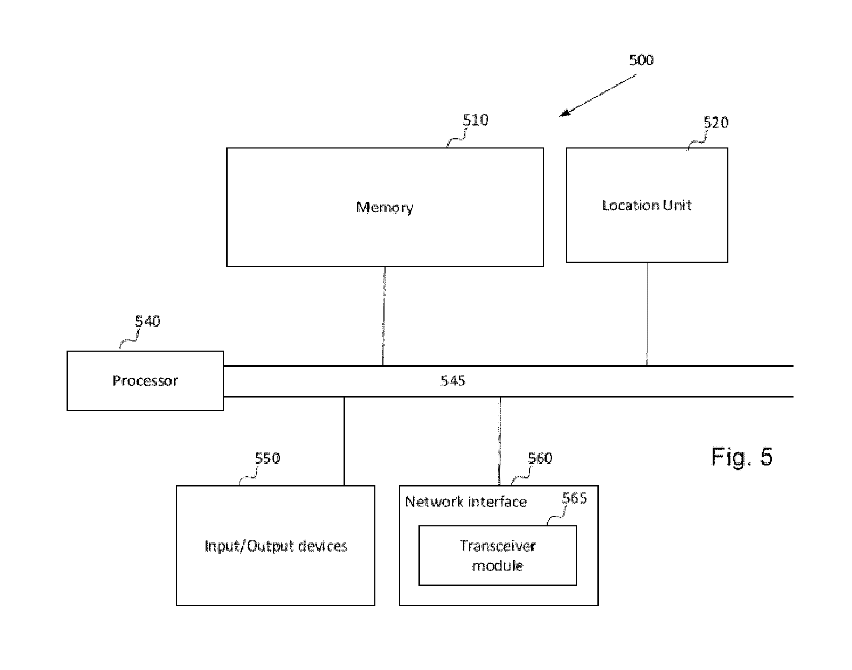

Figure 5 illustrates the functional elements of a communication device 500 suitable for use as an aggregator in the network architecture of Figures 1A, 1B, 1C, 2A or 2B.

The communication device 500 includes a memory 510, location unit 520, a processor 540, input/output devices 550 and a network interface unit 560 having a transceiver module 565. Data is transferred between the various components via a bus 545. To operate as an aggregator, the network interface unit 560, through its transceiver module 565 must be capable of establishing two separate network interfaces: a backhaul interface and a coverage extension interface. In certain implementations, the transceiver module operates in at least two sets of frequency bands: one set of bands that correspond to the RAT of the macrolayer and a further "out-of-band" set of frequencies not used by the RAT. In some cases, communications on the "out-of-band" set of frequencies use a different RAT from the macrolayer.

In certain implementations, the backhaul and the coverage extension interface might use the same working frequency/RAT as a conventional relay node in order to facilitate the deployment of multi-hop scenarios, in which chains of Radio Access Network entities are deployed. For example, a first aggregator may appear to other communication devices as a Donor eNodeB and a second aggregator may appear to the first aggregator as a conventional UE while providing its own cell to nearby communication devices appearing to them as a conventional Relay Node.

Clearly the backhaul connection from the backhaul interface of the communication device 500 need not be a cellular wireless connection and may include non-cellular wireless and/or a fixed line connection using a connection technology such as: optical fibre cable technology; ethernet technologies; a fixed line xDSL technology; microwave backhaul technology; visible light communications, VLC and/or a Wi-Fi technology.

As noted previously, it is anticipated that many of the candidate aggregators move between two or more static locations over a period of hours or days. It is therefore important that the communication device 500 can, using data obtained from the location unit 520, provide adequate reports of changes in location, which may in turn inform the controller's decisions as to whether the communication device is considered a candidate aggregator and whether, if a candidate aggregator, it should be activated/deactivated as an aggregator.

The location unit 520 may include a global navigation satellite system (GNSS) unit, such as a global positioning system (GPS) unit or the like to provide location information for the communication device 500 as well as cell synchronization if other methods are not available. Alternatively or additionally, the location unit 520 may obtain a location "fix" by inference from the RSRP together with knowledge of the location of cell sites in the macrolayer.

By obtaining a plurality of location fixes of the communication device 500 at different (known) times, the communication device 500 can determine its current mobility level. The mobility level may be determined as a binary determination, i.e. the device may be "static" or "non-static": clearly however a non-static mobility level can be more finely distinguished by characterising the degree and nature of the mobility situations, e.g. semi-static/nomadic scenarios, high mobility, static relative to others (yet changing location), etc. Alternatively, the communication device 500 may report each location fix (together with a time stamp) to the controller and the controller may determine for the current mobility level of the communication device 500. In the latter case, the persistent reporting of location fixes may incur a higher cost in terms of battery usage necessary to facilitate the transmission of such reports.

In certain embodiments, the communication device is not considered a candidate aggregator device if the mobility level is not "static". In other cases, there may be non-static mobility states which nevertheless qualify the communication device to be considered a candidate aggregator device (for example, the detected movement may be determined to be at a speed lower than a predetermined threshold speed, or the change in location may be within a limited geographical area). In the latter case, the controller may determine that an alternative pattern of operation (such as the selection of aggregator selection routines that are more suitable for such qualifying non-static situations) may be needed to ensure effective use of communication devices having qualifying mobility statuses.

While not shown, the communication device 500 may be powered from a battery - such as a rechargeable Li-ion battery, conventional in the field of portable cellular communication devices, such as smartphones. The level of that battery may conveniently be monitored. Alternatively or in addition to the mobility criteria discussed above, the communication device may be rejected as a candidate aggregator device if the monitored battery level drops below a battery level threshold.

In the present discussion, it will be readily apparent to the reader that many alternative and complementary factors may be used to determine whether a given communication device may be considered ready to act as aggregator: mobility status as discussed above is one of a number of useful criteria upon which readiness may be determined. Indeed, mobility status as illustrated - where a simple dichotomy is made between "static" and "non-static" status - is clearly a simplification of a more complex determination of a plurality of categories of "mobility status" (which might span multiple degrees and or types of "mobility", for example).

For a device to be determined to be "aggregator-ready" it must fulfil certain physical criteria (e.g. being switched on, capable of receiving and sending signals according to an appropriate protocol, etc.) and fulfils one or more criteria for suitability: for example exhibiting a mobility status that permits effective aggregator operation. Battery life is a significant example of a physical criteria which would also be considered to determine readiness to act as an aggregator.

Even if conditions exist that suggest it would be possible to deploy one or more aggregation layer in a cellular communication network, there must be a good reason to decide to set-up an aggregator layer: in essence there needs to be some tangible expected benefit in doing so rather than persist with the normal macrolayer operation.

The present disclosure relates to the mechanism by which the controller entity (i.e. the aggregator controller, AC) determines which communication devices are to be considered as candidate aggregators, and of these candidate aggregators, which is to be selected for service as an aggregator.

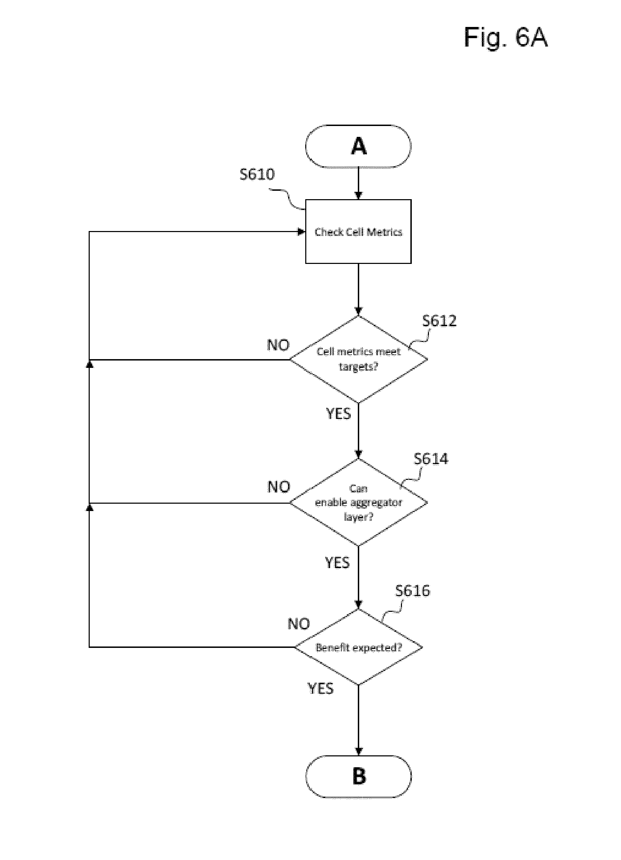

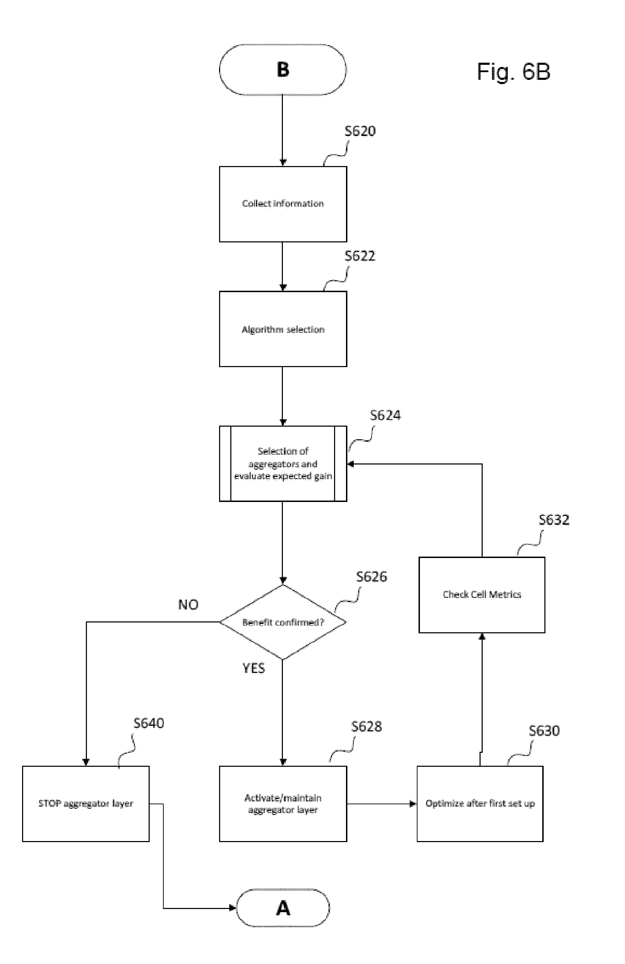

Figures 6A and 6B show a flowchart of certain operations performed by a controller entity in determining whether activation of an aggregator facility is supported.

At operation S610, the controller obtains values for one or more cell or user related metrics, referred to hereafter as "cell metrics", thereby checking the performance of the macrolayer. The cell metrics may include for example, measurements of: cell load (for instance, resource block (RB) usage), cell throughput, number of active communication devices located in predefined portions of the cell coverage area, a "happiness" value for the users (measured latency in data transfer, uplink waiting time, or a value obtained by inference from user feedback in social network services, for example); and/or control resource usage (e.g. PDCCH usage).

The cell metrics provide a measure of performance of the macrolayer that is used in determining whether the conditions in a given area of radio coverage offered by a cellular communication network support the activation of an aggregator facility. Here the given area of radio coverage may be selected from: a macrocell coverage area for at least one macrocell within the cellular telecommunications network; a coverage area for at least one sector within the macrolayer of the cellular telecommunications network; and the coverage area of the entire cellular telecommunications network.

In certain cases, the controller may be configured to define the given area of radio coverage which is to support the activation of an aggregator facility by identifying a subset of available cells for which one or more cell parameter conditions hold, e.g. more than a given number of cells in the subset have a cell metric and/or user metric lower than corresponding threshold value. This might result in the area of radio coverage which is to support the activation of an aggregator facility being a subset of the cells in the cellular network covering an entire city.

In Figure 6A, for example, this determination involves two distinct stages: operation S612, which deals with certain conditions hold that would make activation of an aggregator facility desirable (even necessary), and operation S614, which deals with further conditions which would determine whether such a facility would be feasible. In alternative approaches, the conditions that support activation of an aggregator facility may be performed in other ways, in particular operations S612 and S614 may be performed in parallel with one another or in "reverse" order; furthermore, all conditions may be assessed in a single procedure based on the cell metrics.

At operation S612, the controller determines whether the cell metrics meet target threshold values. This operation may include: determining whether cell load (i.e. RB usage) exceeds a load threshold while throughput lies below a minimum throughput threshold; determining whether the number of users in a region of the cell (such as the cell edge) exceeds a user number threshold while throughput per App falls below a minimum App throughput threshold (an App is a software application executable on a user's communication device: Apps that rely upon network connectivity may be affected if the throughput allocated is below some threshold, for instance, a video streaming App with a throughput lower than 300kbps would provide an inadequate display output); determining whether a happiness metric (whether aggregated for a number of users or a group of users or not) lies below a happiness threshold; and/or determining whether the usage of control resources (such as PDCCH) exceeds a control resource threshold.

If the cell metrics meet the target threshold conditions, the controller concludes that necessary conditions for aggregator layer deployment hold and moves to operation S614.

At operation S614, the controller determines whether certain conditions sufficient for aggregator layer deployment hold. The controller thus determined whether effective aggregator layer deployment will be possible. Operation S614 may include determining:
whether there are aggregator enabled communication devices (i.e. candidate aggregator devices) in the cell and whether these communication devices have certain characteristics in terms of mobility (e.g. they are, have been for an amount of time, and/or are expected to be, "static");
whether there are communication devices (aggregator enabled or not) in one or more macrocells with certain characteristics in terms of mobility (e.g. they are, have been for an amount of time, and/or are expected to be "static");
whether the controller has access to data concerning path loss towards the macrocell and/or amongst communication devices (e.g. UEs/terminals) and/or location information of the aggregators and/or the other communication devices;
whether there are communication devices in coverage of potential aggregators;
whether there is a matching between the capabilities (technology/band supported) between aggregators and nearby communication devices;
whether at least some of the aggregators have sufficient battery life to maintain aggregator functionality for a predetermined period of time;
whether conditions of low interference hold; and/or
whether spectrum and technology resources needed for use in deployment of the aggregator layer are available.

If the controller concludes that sufficient conditions for aggregator layer deployment hold, the controller next performs operation S616. In certain alternative approaches, the controller performs operation S616 before or in parallel with the operations at S612 and/or S614.

In operation S616, the controller makes a preliminary determination of whether a benefit for the network would be expected if the network were to deploy the aggregator layer. This preliminary determination considers a limited number of properties of the cell metrics obtained at operation S610 and thus relies upon a subset of the information necessary for aggregator layer deployment: for instance, a benefit at this stage would be expected because there were several static users at cell edge under the potential coverage of some static aggregators or because there are small cells with unused capacity in an area close to some static users but with aggregators located in their coverage area.

If it is determined that either necessary conditions (at operation S612) or sufficient conditions (at operation S614) are not present, the controller waits a predetermined period of time (by setting a timer for example) and then obtains a further set of cell metrics (at operation S610). Likewise, should it be determined that no benefit is expected from the deployment of the aggregator layer (at operation S616), the controller will again return to operation S610 and obtain a further set of cell metrics.

If however, at operation S616, the controller makes a preliminary determination that there would be an expected benefit, in principle, for the network if the aggregator layer were to be deployed, the controller initiates a more detailed phase of operation (illustrated in Figure 6B) by collecting further performance information, operation S620 (in addition to the cell metrics obtained at operation S610).

During the collection of further performance information, operation S620, the controller obtains a list of aggregator enabled communication devices (i.e. candidate aggregators) currently camped within a given macrocell, using information updates received, at temporally spaced-apart intervals, from the aggregators. In addition to the list of candidate aggregators, the further performance information may include some or all of the following information obtained from the respective aggregators:
- location (of the updating aggregator). This location information may be obtained by the aggregator by inference from the RSRP and/or using a GPS unit.
- pathloss/SINR (measured at the updating aggregator). This may be with respect to the current macrocell or a set of macrocells.
- mobility level (static or not) measured by the aggregator itself
- information on location and/or pathloss of all UEs or other network connected communication devices that are static (optionally, this may be filtered to relate only to UEs that are static and that in addition are expected to remain static by analysing and using geolocalized historical information of the UE) and that are camped/or are/have been connected there

The controller processes some or all of this performance information to evaluate the relative distance and pathloss/SINR (or similar quality) between candidate aggregators and the devices of users in the cell.

In certain embodiments, the controller makes a selection of aggregators from among the aggregator enabled communication devices in accordance with a single aggregator selection algorithm. In other embodiments, there may be a plurality of available aggregator selection routines (i.e. algorithms) and it is first necessary to determine which routine to adopt. When required, the operation of determining which routine to use may be any conventional selection operation.

Figure 6B illustrates one embodiment where a plurality of aggregator selection routines are available. Here, the available respective aggregator selection routines may each be suited to respective, different performance conditions. In operation S622, an algorithm corresponding to one of these routines is determined depending upon the availability of specific further performance information, such as aggregator location information or pathloss measurement data. In cases where only a single aggregator selection algorithm is available, the determination of which algorithm to use is trivial and operation S622 may be omitted.

Once it is determined which routine (i.e. algorithm) is suited to the available further performance information, this algorithm determines which, if any, aggregator enabled devices should be activated for aggregator functionality and defines the sub-processes by which benefit (i.e. achievable gain) from aggregator layer deployment will be calculated. The algorithm thus serves to select aggregators from among the candidate aggregators for deployment of the aggregator layer. The operation of this algorithm is illustrated as operation S624 in Figure 6B.

At operation S624 (whether this is the only available aggregator selection routine or a routine determined to be suited to available further performance information at operation S622), the controller makes a selection from among the aggregator enabled communication devices, this selection being a selection of one or more aggregators based either on individual characteristics of the respective, selected aggregators or collective characteristics when the selected aggregators are considered as a group selected from among the aggregator enabled communication devices.

While the present embodiment contemplates the use of a single aggregator selection routine within a single area, this does not preclude the use of more than one selection routine - for example, the use of a first aggregator selection routine during peak hours of the day or week and a second aggregator selection routine at other times. Furthermore, it is equally contemplated that where two areas of radio coverage are considered separately, each area may adopt a respective, different aggregator selection routine consistent with the information relative to candidate aggregator devices that can be obtained.

It is thus possible that the choice of aggregator selection routine may be fixed based on empirical knowledge (using routines for which sufficient information has been available historically, because the penetration of terminals supporting a network operator client application has become sufficiently high, say) or dynamic (based on how much information is currently available for each routine).

It is further contemplated that the choice of which selection routine to adopt may be governed by a quality metric of the effectiveness of any given routine as a function of the amount of relevant information that can be collected. By obtaining information that might be used by one or more of the possible routine and discarding the routines for which available information is such that that their quality metric is too low, the routine whose quality metric implies it can provide the highest gain for the network would then be chosen.

In certain embodiments, the selection of aggregators includes the selection as a group from some or all possible different groups or subsets of aggregator enabled communication devices, each group being termed an "evaluation group". An expected gain for each evaluation group is then calculated.

In other embodiments, the selection of aggregators is the selection of individual devices (i.e. subsets of aggregator enabled communication devices having a single member each). Here, expected gain is calculated for each individual candidate aggregator.

The expected (achievable) gain results from an evaluation of the expected improvement in a given cell metric: this cell metric may be the, or one of the, cell metrics obtained at operation S610. For example, the expected gain may be the result of a comparison between a) the value of that given cell metric when the or each aggregator is selected and b) the currently experienced (i.e. measured) value of that cell metric.

In certain cases, the expected gain may be expressed as the difference between the value of a given cell metric predicted for a given evaluation group (evaluated before actually activating that group for aggregator functionality) and the current value of the given cell metric. Where no aggregator enabled communication devices are activated, the current value of the cell metric is the measured value of the cell metric for the cellular communication network where no aggregator functionality is activated. Otherwise, the current value of the cell metric is the measured value of the cell metric for the network where a current group of aggregator enabled communication devices are activated for aggregator functionality, said current group need not be the evaluation group. The prediction of the cell metric may be a function of the further performance information collected at operation S620.

Where expected gain is determined for evaluation groups or individual candidate aggregators, the aggregator selection algorithm then assesses the respective expected gains for some or all possible different aggregators or groups of aggregators, the selected aggregator or group of aggregators may be the individual or group providing the greatest expected gain. Alternatively, the selected aggregator or group of aggregators may be selected from a subset of groups having gains that exceed a threshold gain, taking account of other practical constraints such as maintaining aggregators that are already active unless there is a good reason to stop them (e.g. battery level dropping below a level that can support continued operation or detected movement of the active aggregator).

At operation S626, the controller makes a full determination of whether a benefit for the network would be expected if the network were to deploy the aggregator layer by modelling network performance for a network with the selected aggregator or group of aggregators activated and comparing that performance to the currently measured network performance information (as collected at operation S620).

In the case of the aggregator selection using evaluation groups, the full determination of benefit for the network entails comparing the expected gain from the use of the selected evaluation group of aggregators to data representative of the current network performance.

In a specific example where one of the selected subsets of aggregators is not currently active, sufficient benefit from first activation of that selected subset would be confirmed where the measured value of a given cell metric (assuming the given cell metric is the one used in the algorithm at operation S624) is significantly higher than that cell metric measured before the activation.

In another example where the aggregator layer is activated (i.e. at least one subset of aggregator enabled communication devices are activated for aggregator functionality), sufficient benefit is confirmed when the gain is higher than one of a reference average metric (e.g. historical data) or a cell metric measured in the previous last N iterations, where N is an integer greater than 1.

In certain cases, a measured value of a first metric (metric A) is used before activation, whereas after activation, a second, different, metric (metric B) is used instead. Known pre-activation network performance indicators (often referred to as KPIs - or key performance indicators) are used in order to evaluate metric A. Estimated values of metric A are compared to known measured values of metric A, to indicate whether the network needs assistance and to deduce that activation of the aggregator layer will provide that assistance. After activation, metric B may be calculated using both the stored KPIs pre-activation, and the current KPIs measured after activation. If metric B after activation is sufficiently better than metric B before activation, the aggregator layer is maintained active.

If the determination at operation S626 is that a net benefit is indeed provided by deploying the selected device or group of devices (i.e. subset) as the aggregators, the controller activates an aggregator server (operation S628) to support the aggregator layer and instructs each of the selected communication devices to activate (or maintain active) their respective aggregator functionalities (e.g. by executing a routine in an aggregator client application). These aggregator functionalities include functionalities consistent with operation as a MiFi architecture access point (offering WiFi protocol and/or VLC connectivity to nearby communication devices) and/or as a small cell (offering connectivity using a cellular telecommunications standard).

While not illustrated in Figure 6B, the controller may conveniently launch a RAT selection routine to determine which carrier bandwidth/RAT/band will be used by each (selected) aggregator, the carrier bandwidth/RAT/band being chosen from among one or more permutations of available RAT, band, and carrier bandwidth available for the implementation of an aggregator layer in a specific cell. For instance, the RAT selection routine may determine that as LTE FDD2.6 is not used in current and/or neighbour macrocell, it can be used by all selected aggregators within range of those cells.

As discussed in relation to Figure 4, nearby communication devices may transfer some or all of their data traffic to the selected aggregator(s) differently depending upon whether they are in an "idle" or "connected" state.

In the former case, handoff of idle devices may be facilitated by the controller modifying the neighbour cell list (NCL), which is provided to devices in idle modes, with the parameters of the selected active aggregators.

In the latter case, the controller may determine whether to request a handover for a device in connected state when information such as radio measurements from communication devices in the macro cell compare unfavourably with radio measurements from communication devices using the selected aggregators (always providing such information is available at it might be from access to the relevant RRM function of the eNodeB/RNC in the macrocell). Examples of communication devices for which a handover might be requested include those devices: a) that are in the coverage area of a specific aggregator(s) and b) that have channel quality indicator (CQI) and/or RSRP in relation to the macrocell that is worse than the one of the aggregators.

While not illustrated in Figure 4, the aggregator may alternatively (or additionally) offer WiFi protocol and/or VLC connectivity to nearby communication devices (thereby operating as a MiFi architecture access point). In such cases, handoff onto the aggregation functionality may be effected by informing respective nearby communication devices which aggregators offer an access point in the cell and by commanding those communication devices close to the identified access points to enable Wi-Fi transmission.

Optionally, the controller may then seek to optimise the aggregator layer, operation S630.

Optimization by the controller may include at least one of the following procedures:
- checking, once a given nearby communication device is connected to an aggregator, whether that device has a worse CQI/SINR/RSRP with respect to the the macrocell than with respect to the aggregator, and in such a case will be (or can be) handed over to the Macro layer (e.g. by issuing a handover command or releasing the aggregation connection with redirection). Conveniently the selection parameters for this device would be changed for an amount of time to avoid unwanted ping-pong effects (i.e. hysteresis);
- checking the performance in the aggregator layer against the performance that would be expected if a given communication device were to stay in the macrolayer, depending on which information can be made available to the controller and/or to the aggregator. Examples of the performance information that may be checked include measures of user happiness metrics such as: latency (i.e. the round trip time (RTT) for transmitted and received packets or uplink waiting time. Examples of the performance information that may be checked may also include: historical data (such as throughput for specific Apps) obtained in the macrolayer in similar or same location and under the same or similar RSRP/CQI conditions;
- checking the level of interference and/or availability of resources for the spectrum/technology used in the aggregator layer and taking actions to improve these parameters (e.g. create clusters of spectrum/technology utilization, reduce utilization of those resources in the macrolayer); and
- optimizing the selection of aggregators taking account of mobility. The aggregators themselves may be required to take certain actions when aggregated users (i.e. communication devices using the aggregation facility of a selected aggregator) start mobility. Likewise, when aggregators themselves become mobile, the controller may act to alter the performance of the aggregator later, e.g. by instructing the newly mobile aggregator to switch off aggregation functionality.

Checking the performance in the aggregator layer using RTT may involve comparing RTT for the same packet using macrocell and current aggregator layer service respectively. Using uplink waiting time to check performance may involve comparing this time before and after the optimization.

Checking the performance in the aggregator layer using historical data may involve comparing historical data to actual data obtained through the aggregator. It is also possible to run periodical speed tests just to check the current quality.

Whether optimised as described or not, the controller iterates back through operations S622, S624 and S626, selecting one or more aggregators which may be identical to the aggregator(s) selected in previous iterations or may represent a group having a different constitution of aggregator enabled communication devices.

Periodically, cell metrics are checked - operation S632 - and this information is used in further iterations of operations S622, S624 and S626. The cell metrics checked here may be the same as those obtained at operation S610: equally they may be different from those cell metrics.

If the determination at operation S626 is that a net benefit is not in fact provided by deploying the selected devices (or group of devices) as aggregators, the controller halts the use of the aggregator layer operation S640. This may entail instructing all aggregator enabled communication devices in the cell to deactivate their aggregator functionality and to deactivate the aggregator layer server in the controller.

After a second predetermined time (typically longer in duration than the period characteristic of the iteration of operations S622, S624 and S626), the controller restarts first phase of determining the preliminary benefit of aggregator layer deployment at operation S610.

To provide the information needed by the controller to perform the operations described in Figure 6A and 6B, communication devices are arranged to present information upon which the controller can make its respective determinations of suitability of the device as a candidate aggregator and whether a suitable candidate is to be activated (or deactivated).

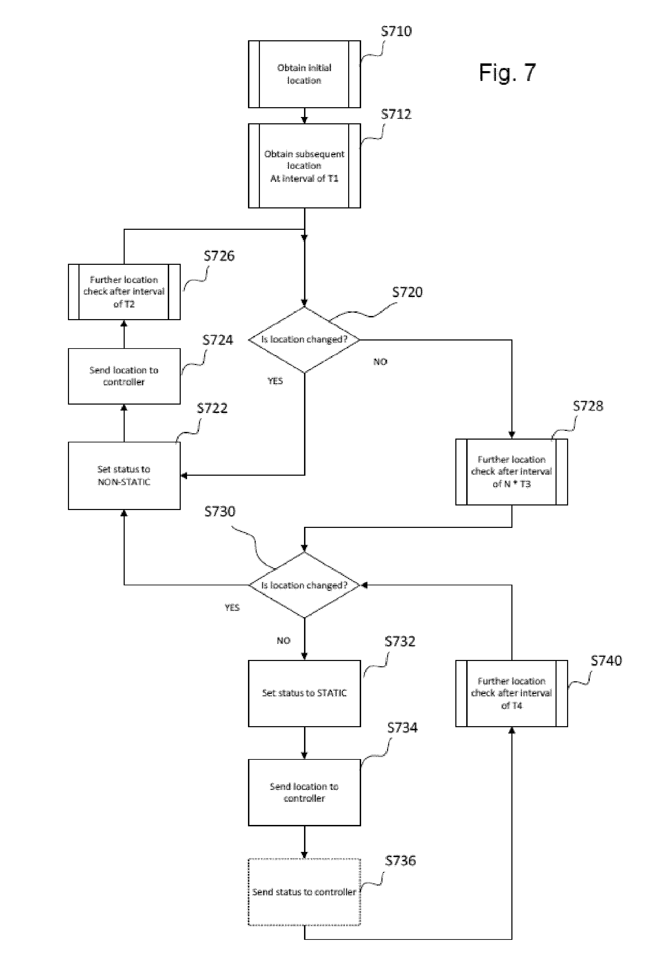

Figure 7 shows an exemplary flowchart showing certain operations of a communication device in accordance with an aspect of the present disclosure.

In Figure 7, the communication device evaluates its current location at temporally spaced-apart intervals (e.g. every T1 seconds). Once there are at least two measures of location (i.e. location fixes) it is possible to determine whether there has been any change in the mobility state of the communication device. Any given location fix is conveniently obtained with a minimum level of accuracy. The time difference between the acquisition of the location fixes is used to determine the degree of mobility (if any) between two fixes. To ensure that fixes are sufficiently far apart in time for a significant movement to be detected each fix is conveniently associated with a corresponding time stamp (which may be acquired from a connected macrocell and/or within the GPS signalling structure). Where more than one communication device is used it is contemplated that they may be operated in a synchronised manner.

An initial location fix is obtained at time T0, operation S710. At a point in time T1 seconds later than T0 a further location fix is obtained, S712.

The location fixes T1 seconds apart are compared to determine whether there has been a change in the detected location, operation S720.

In other embodiments, the algorithm used to determine whether a change in location has occurred may alternatively or additionally use parameters other than reported position and time, for example direction of movement or altitude.

In general terms, a potential aggregator may be considered to have moved (i.e. changed from a "static" state to a "non-static" state) if its position is displaced by a distance of D metres over a time interval Tᵢ-T₍ᵢ₋₁₎, where D and Tᵢ can be determined, calculated, signalled or otherwise obtained dependent on parameters (e.g. current mobility state).

Where the location has changed between the fixes, the mobility state is set to be "non-static", operation S722. For the sake of clarity, the scenario illustrated in Figure 7 shows the determination at operation S720 as binary between "static" and "non-static", on the basis of any detected change in location. The skilled reader will readily appreciate that alternative determinations, having more than two cases or indeed two cases decided upon different criteria, may be substituted for the current operation S720 without requiring any other alteration to the flowchart. For example the change in location between fixes may be registered as indicating a "non-static" state when the location has changed by more than a minimum position change threshold of D1 metres since last location fix.

When in non-static mobility state, new location fixes are sent to the controller, operation S724 and a further location fix is taken after an interval of T2 seconds/minutes, operation S726. Typically the time scale T2 is greater than T1, but could be the same or less than T1: sending updates will use power, computation and signalling resources etc. so this task would be performed less frequently when the latest information is that the device is in mobility (and presumably not currently for consideration as a candidate aggregator). The operation flow then returns to operation S720, where it is again determined whether there has been a change in the detected location. In this way the location is still checked in case the mobility state has changed to "static". If the communication device has become static but the latest report still indicates that its state is "non-static", the use of a T2 greater than T1 will merely result in a slight delay in considering it as a potential candidate for activation.

Where the location has not changed between the fixes, it is determined that the mobility state may be "static" but that further fixes are required to be more certain. In the illustrated case, it is considered that a communication device needs to have been static for a longer period than the interval of T1 between successive fixes in operations S710 and S712 (during initialisation) or the interval of T2 in operation S726 (in subsequent iterations).

To avoid a situation of "false" attribution of "static" status to a device (which may after all be embedded in a vehicle) just because the device has stopped temporarily (e.g., car that has stopped at a light, to re-fuel or in heavy traffic, or a car that has temporarily parked), the communication device obtains a further location fix at time N * T3 seconds later, where N and/or T3 could be dependent on the type of communication device (e.g., in a car, residential) or type of scenario of installation (e.g., at a bus terminal, in a scenario that is likely to be static), operation S728. For example, if the scenario is likely to be static, it may be adequate to set N or T3 equal to zero or close to zero as it may be assumed that an earlier indication of "static" status at operation S720 is likely to be correct.

The location fixes N * T3 seconds apart are compared to determine whether there has been a change in the detected location, operation S730. If at the end of the period N*T3 the position is still unchanged, the mobility state is set to "static", operation S732. The current (static) location fix is sent in a reporting message to the controller, operation S734. Optionally, the communication device may also indicate that it is in the "static" state (either in the same reporting message as operation S734 or in a separate status reporting message), operation S736. This option may be considered convenient as it facilitates understanding of why the location fix was reported. Alternatively, the controller may infer that because it has received a reporting message having a location fix from the communication device, it can conclude that the reporting communication device is static.

Where location fixes are derived from GPS-based position signalling, the location fix may be sent as GPS location information (i.e. based upon the WGS84 standard) rather than latitude and longitude alone. Conveniently, the reporting message may include an indication that the location information is in GPS position format. Alternatively or additionally, the reporting message may include an indication that GPS information is available, regardless of the source of the reported location fix.

A reporting message (either the same reporting message as operation S734 or in a separate additional information reporting message) may optionally include additional information, for instance: specifics of the candidate aggregator: e.g. device model, software release information, hardware identifiers, etc.; device state, such as battery status; and/or radio information, such as camped Cell Id, Radio coverage quality, CQI of radio channel used to perform such a communication, neighbour cells for the communication device modem, etc.

The flow then iterates, whilst the communication device is in mobility state "static". The communication device obtains a further location fix after an interval of T4 seconds, operation S740. T4 is typically a shorter time period than T2, since it is desirable to avoid a communication device being considered "static" when it is in fact "non-static": any static communication device is a potential candidate aggregator, so any false attribution of "static" status may have a detrimental effect on the delivery of an effective aggregator layer. The operation flow in the "static" mobility state then returns to operation S730, where it is checked once again whether the detected location has changed. Any change in location results in the mobility state being set to non-static and location fixes being taken at intervals of T2 (rather than T4).

In a further arrangement of the present disclosure, more than one aggregation layer is activated within the network. In certain cases, respective aggregation layers are activated and deactivated in corresponding sectors or groups of sectors of the cellular network. In certain cases aggregation layers are established within one sector or cell that extend the coverage of that sector or cell to encompass communication devices served by neighbouring sectors or cells: thus the benefit to the network of the deployment of any given aggregation layer may be calculated for a region of the radio coverage of the cellular network that includes more than one sector and/or cell.

The discussion above presumes that, for aggregators at least, geographical location information can be provided directly to the aggregator controller through a method of a pre-installed aggregator client application. In the case of communication devices more generally, those that have a pre-installed aggregator client application (or an alternative "terminal only" client application) can exchange location information with the controller. Alternatively, where the communication device is compliant with Release 10 of the 3GPP, GPS location information may be sent directly by the communication device to the eNodeBs, and this can be exposed through the SAVI platform to the controller.

Certain embodiments of the present disclosure relate to the dynamic activation of one or more communication devices as aggregator devices to provide an aggregation layer, the activated devices may be selected from a plurality of communication devices having the necessary characteristics to provide an aggregation functionality. Each activated aggregator-enabled device appears, to the macrolayer as a UE; while to other communication devices, they each appear as a class of small cell base transceiver station or a WiFi access point, for instance. The dynamic activation is due in part to determining if a benefit could be expected by such dual UE/small cell activation: that might arise if the macrolayer alone doesn't provide a prerequisite quality of service to the other communication devices. Dynamic activation also requires a more fine-tuned determination dependent upon selecting a set of devices capable of the dual UE/small cell or UE/MiFi functionality for activation and determining whether the network would benefit from the activation of that particular group. Only where the network is determined to benefit on the basis if this fine-grained determination will the selected aggregator-enabled communication devices be activated as hybrid UE/small cells (or UE/MiFi devices, say).

Considering once more the simplified example of a binary determination of whether a communication device is in "static" or "non-static" state, it is clear that once an aggregator device has activated an aggregator mode (and radiates a small cell, VLC or WiFi coverage, for example) it is desirable to monitor the location of the device in case there is a change in that mobility state and method to deal with change of mobility state: "non-static" state being presumed incompatible with effective aggregator functionality.

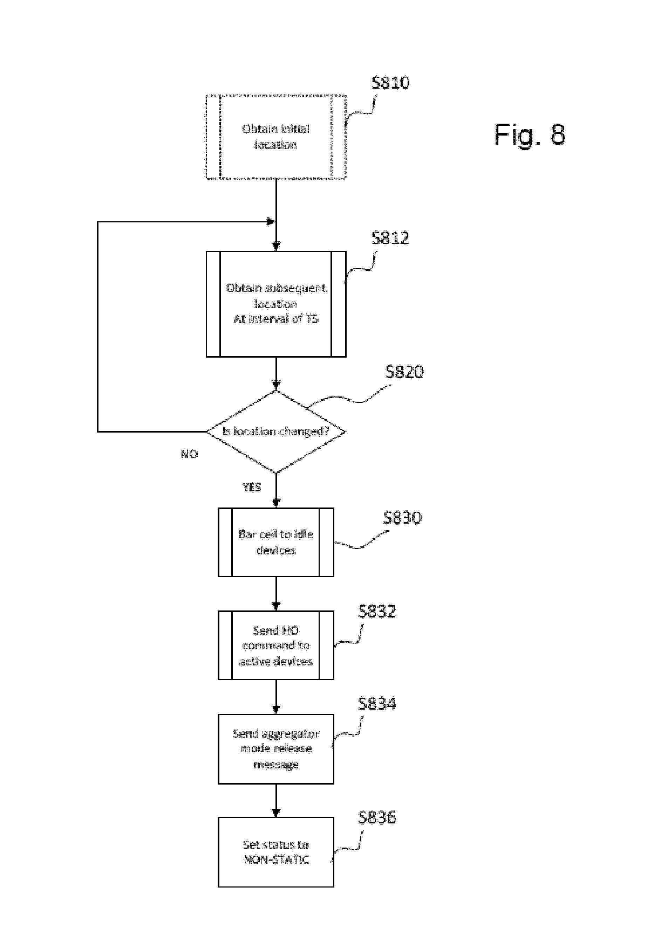

This scenario is illustrated in Figure 8.

Once the communication device has been activated, the communication device monitors its location every T5 seconds (obtaining an initial location fix at operation S810, if necessary and further location fixes at operation S812). T5 needs to be a very short time as it is crucial to determine as soon as possible whether the communication device is still "static" since the performances of the network may be affected. Note that this may be the same iterative monitoring of mobility status as at operation S740 of Figure 7 or a distinct iteration at a different time interval specific to monitoring the operation of active aggregator devices.

The location fixes obtained at operations S810 and S812 are compared, operation S820, and if location changes (to a predetermined degree of accuracy, etc.), the communication device will immediately bar the cell (so that the UEs in idles will not connect), operation S830 and send handover commands to all the communication devices connected to the aggregator cell and to the macrocell S832. The handover procedure from aggregator cell to macrocell may then be handled according to any conventional standardised handover procedures.

The communication device sends the handover command because it effectively operates as a base station for the aggregator cell when it is activated.

The cell barring is important in order to prevent nearby communication devices in idle mode from attempting to connect to the cell radiated by the communication device, while that cell is still being radiated, to support the handover operation, for instance.

Conveniently the deactivating aggregator device sends the controller a message including an indication that aggregator-state has been released giving the cause as "mobility". Additionally, the deactivating aggregator device may then update its mobility state to "non-static".

The communication device may additionally monitor its battery life every T6 seconds. As noted previously, low battery level may preclude the communication device from being considered a candidate for activation. If expected remaining battery duration is lower than T7 seconds/minutes, the active communication device may conveniently gradually deactivate the aggregator mode by performing operations similar to operations S830 and S832. In this case however, handover commands will be executed, and confirmed completed, one at a time, before sending out further handover commands.

As will be apparent from the preceding discussion, it is assumed that the interactions between controller and communication device are governed by a shared communication protocol.

Using this protocol, the controller can send information requests to one or more communication devices (aggregators), specifying any additional information it wants to receive.

The communication device likewise uses the shared protocol to respond to such information requests, providing the requested information, which may for instance consist of the following:
- Mobility State
- Communication device specifics: e.g. device model, software release, hardware identifiers, etc.

- Device State: battery status
- Radio information: Serving Cell Id, Radio coverage quality (e.g. Serving Cell RSRP, Serving Cell RSRQ, etc.); CQI of radio channel used to perform such a communication, Neighbour cells for the UE modem
- Radio measurements executed on neighbour cells, detected cells on other LTE frequencies that are not part of the neighbour list, Wi-Fi access point identifiers (i.e. SSIDs) and strength detected onto Wi-Fi receiver

Conveniently, the communication device may maintain a protocol connection open by sending dummy bits for the next Z seconds, otherwise it stops sending dummy bits.

Using this protocol, the controller can also send commands instructing the Communication device to enter into aggregator state (i.e. as a either a small cell and/or Wi-Fi Access point). The communication protocol for such a command includes a set-up command (sent to the communication device) providing the following information: LTE carrier to be used for transmission, and main parameters; transmission, TX, power to be used: (default is "MAX TX Power); optionally, a parameter for setting-up a second carrier; optionally, a parameter to set-up a Wi-Fi Access Point; time of the day in which the cell shall start radiating; Parameters needed to manage the status of local algorithms within the Communication device whilst in the aggregator state.

Once the command to enter aggregator mode is received, the communication device uses the shared communication protocol to obtain, from a controller database or a database within the OSS server, the parameters needed to set-up the aggregator cell: for example, IP addresses (if not derived with a fixed rule from current R-UE IP address). Alternatively, the communication device may use the parameters used last time it acted as an aggregator, provided that some criteria are still met: for example that the location is still the same as last time; that, while the location has changed, the RAU is still the same; that, while the location has changed, the R-U camped in the same cell as last time.

Once the communication device has the information needed to set-up the aggregator cell, it prepares its transceiver module (565, Figure 5) to be ready to radiate. The communication device then starts radiating at the requested Time of the Day. The Communication device then confirms to the controller that it is radiating (i.e. that the aggregator mode is active).

Whilst the communication device is in aggregator state, the communication protocol may also be used by the controller to request provision of additional information, such as: Battery status; Number of connected communication devices; Average Resource Blocks occupation; Average CQIs of the connected UEs; and Average CQI of the connected Modem.

Even if conditions exist that suggest a communication device is a good candidate aggregator (e.g. the device is located in good macrolayer radio coverage; the radio coverage offered by the aggregator device extends overall coverage and/or provides an additional coverage in geographical areas associated with the heavy use of macrocell network resource; and/or the device has sufficient remaining battery life, say), there must be a tangible benefit in actually configuring any given candidate aggregator as an aggregator rather than another candidate (or none at all). The benefit may, for instance, be that the candidate device is located in a position where generating an aggregator cell will provide a significant extension in overall network coverage area.

Once candidate aggregators are identified, it is yet to be determined which candidate aggregators are to be configured for service as aggregators (i.e. selected). In certain embodiments, selection is performed by seeking to maximize the amount of geographical area (corresponding to one cell or several collocated or contiguous cells) subject to cell-edge-type coverage in the macrolayer, where that geographical area is also able to receive an additional coverage layer obtained through the usage of aggregators. In certain cases, the controller therefore computes, for all candidate aggregators, all combinations of coverage created by the candidate aggregators and "selects" the combination of candidate aggregators that can cover the greatest amount of that geographical area.

In refined versions of these embodiments, the best *N* highest combinations are computed (where *N* is a positive integer), and the combination that minimizes the change of acting aggregators as well as minimizing the number of aggregators is then selected for service.

Certain embodiments of the present disclosure seek to select a group of candidate devices for service that collectively provide coverage levels that exceed a coverage threshold in otherwise poor coverage regions such as cell edge regions. Such coverage levels need not be contingent upon knowledge of the presence of active communication devices (UEs) in those regions. The selection may take account of the geographical location, and optionally the received signal code power (RSCP), of the or each aggregator. Thus where two otherwise suitable aggregators are located close to one another, the selection may include only one of the two devices at any given time.

Location information is made available to the aggregator controller, AC using a method such as the present applicant's SAVI platform or as a routine of an aggregator client application executing on each aggregator device.

The operational support system, OSS, of the cellular telecommunications network stores key performance indicator, KPI, data from all network cells, making this historical data available for post processing. In certain embodiments, historical data of the macrocell is analysed to determine which locations of the cell can be characterised as having "good enough macrolayer radio coverage" whilst "close enough to the cell edge to be able to provide good coverage to the cell edge if an aggregator is placed there".

The acceptability of macrolayer radio coverage for a device to be able to operate as an aggregator may be determined by considering measures of signal strength (such as the reference signal receive power (RSRP) as reported by all terminals in the cells).

Certain embodiments of the invention use conventional network planning tools that plot signal strength measures on a geographic map, which can be made to represent a cumulative or averaged strength level taken from a plurality of samples taken over a predetermined period. The historical data used in determining whether the location of the aggregator has "good enough radio coverage" may be supplied by such signal strength maps.

Where the aim of deploying a given aggregator is to extend coverage to a region of a cell or sector having relatively poor radio performance, it will be appreciated that the location of that aggregator relative to that region will determine how useful the device will be as an aggregator. Again the signal strength map will allow the controller to identify such regions. This serves to balance the overheads of bringing any given aggregator into service against the desire to provide an effective coverage extension.

In certain embodiments of the present disclosure, communication devices with enough battery life left and whose location matches areas that balance aggregator backhaul and/or coverage extension are considered candidate aggregators. In other embodiments, other performance condition data is used in addition to, or as an alternative to, remaining battery life as a criterion for configuration as an aggregator. Performance condition data that might be considered includes: whether an aggregator client application is present on the communication device; mobility - whether static or moving; degree of mobility; reported device reliability/faults; device power rating - i.e. whether the device is powered from a main electricity source; forecast availability through the use of historical data or scheduled availability; and subscriber status - e.g. whether the user of the device has granted consent for this usage.

Battery life is of significance for many portable communication devices as each activated aggregator device operates two distinct interfaces (with one or more of these being a radio interface): a (backhaul) interface with a serving base transceiver station (i.e. the macrocell eNodeB) so that the aggregator device appears, to the macrolayer, as a UE; and a (coverage extension) interface with other communication devices, which makes the aggregator device appear as a class of small cell base transceiver station. Operating two interfaces simultaneously, and potentially constantly, draws considerable more power from batteries than occasional operation of a conventional interface between UE and eNodeB.

Certain embodiments then assume a nominal coverage area per aggregator in square meters. Here the controller selects from amongst the candidates those that maximize (or at least deliver an above-threshold level of) the coverage of poor coverage regions (e.g. cell edge areas) of the current macro cell.

Historical coverage data may be obtained from a range of sources including: data stored by the controller itself; traffic maps available using the SAVI platform; data stored in the OSS; and/or other external tools that have post processed the information available in the OSS. Based on the historical data associated with the known location of specific aggregators, a decision can be made to bring specific aggregators into service (or select them in place of others currently in service). This decision may be associated with specific times of the day (or days of the week) since it may then be more likely that a specific aggregator will be located in a predetermined location of the cell.

Periodically, or when some aggregator stops its service as an aggregator for one of a number of reasons (e.g. mobility, user request, etc.) or is set to stop it due to battery life, the aggregator controller may be configured to re-evaluate and reassign the aggregator roles. The re-evaluation process is conveniently a conservative process that seeks to minimize the change of aggregator.

Aggregators not carrying traffic for a given time (say, *x* minutes, where *x* is a number between 1 and 100) can be switched-off, again this may be as a function of the battery consumption.

Certain embodiments of the present disclosure also match the aggregator selection with traffic maps (determined from historical data): examples of such traffic maps include those that represent where traffic is located in a cell and may be generated within the SAVI platform or in conventional network planning tools. These traffic maps conveniently consider all calls (including dropped calls, completed calls, etc.) and their associated location information. Such maps can be made available to the aggregator controller. Since the location of the candidate aggregators is known by the controller, the controller can also match the traffic maps based on historical data with the current location information (for active communication devices) stored by the controller and decide to switch on aggregators that are located within/near areas with statistical high traffic within a cell (especially if those regions are at the cell edge).

In an illustrative use case, a candidate aggregator may be a communication device embedded within a motor vehicle such as a commuter's car. Cars typically stay parked (i.e. static) in a similar area for periods of the order of hours. As cars also have batteries of their own, the battery life of an in-car communication device may also make such a device be more suited to the aggregator role (than a portable handset terminal).

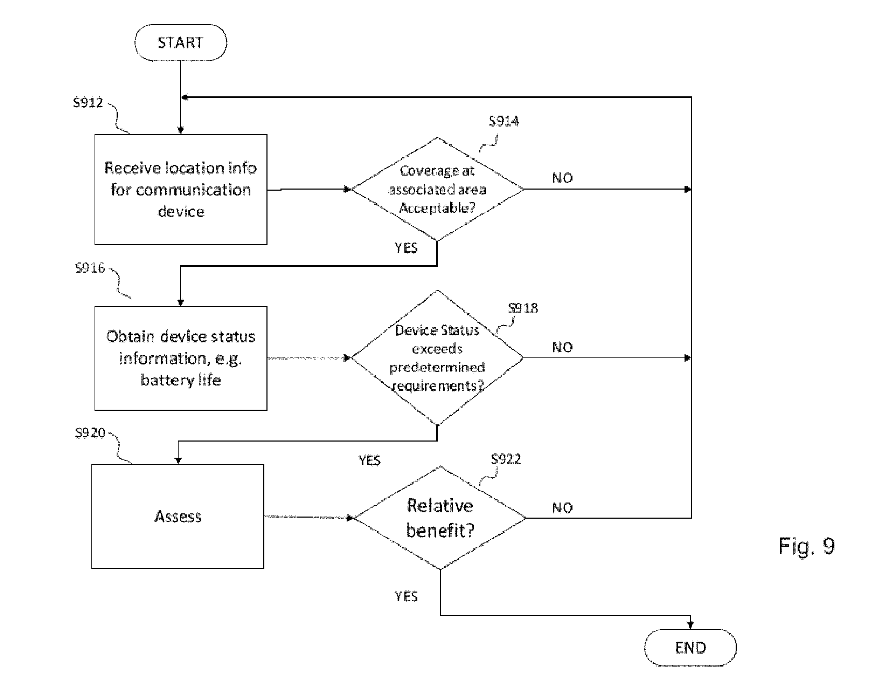

Figure 9 shows a flowchart of an exemplary method in accordance with the present disclosure.

At operation S912, the location of a communication device is obtained by the aggregator controller.

The controller then compares the location thus obtained with historic macro cell information for the proximity of the location of the communication device, operation S914 to determine whether macrolayer radio coverage at the location associated with the communication device is acceptable (for a device that is to be used as an aggregator). In certain embodiments, an aggregator is configured to transmit aggregated data traffic over a backhaul connection by presenting itself to the macrolayer as a UE. For this backhaul connection to be effective, the macro layer radio coverage at the location associated with the communication device must be sufficiently good (in the sense of low SINR and/or high signal power, for instance) to support the aggregated data traffic. The radio performance obtained by aggregator from the macrolayer is important here because that radio performance will effectively define the radio performance of all communication devices connected to the aggregator device if that device is selected to be switched-on.

If the macrolayer radio coverage is deemed acceptable, the controller proceeds to obtain device status information for the communication device, operation S916. This operation may be achieved through an aggregator client application executing on the communication device or by inspection of data held by the serving eNodeB or the OSS for the communication device. Otherwise the process returns to the start to be performed in a further iteration at a later time.

The controller then assesses the device status information to determine whether they exceed the requirements of the aggregator role, operation S918. For example, the device status information may include information concerning the health and remaining stored energy (i.e. battery life) of the communication device - if only a short battery life is available that may not be adequate for configuration in the aggregator role.

If the device status information indicates that the device fulfils the requirements of the aggregator role (e.g. that sufficient battery life remains), the communication device is added to a list of candidate aggregators. Otherwise the process returns to the start to be performed in a further iteration at a later time.

At operation S920, the different candidates are assessed (i.e. scored or ranked) to provide a measure of the benefit of using that devices as an aggregator.

The relative benefits of using a given candidate aggregator as an aggregator are then compared the benefits associated with other aggregator(s) in the area, operation S922. The relative benefit may be calculated by any conventional sorting algorithm including, for example, comparison of calculated benefit values in pairs to comparison of a given candidate aggregator's benefit value (as an aggregator) to a "hybrid" benefit value derived as a function of one or more other candidate aggregator benefit values.

If the relative benefit is not great, the candidate aggregator is not activated and its location is stored at the controller for use in further iterations of the process.

If however the benefit from deploying a given devices as an aggregator is calculated to be great, that device is configure to activate an aggregator functionality. Again the location of this now-active aggregator is stored at the controller for use in further iterations of the process.

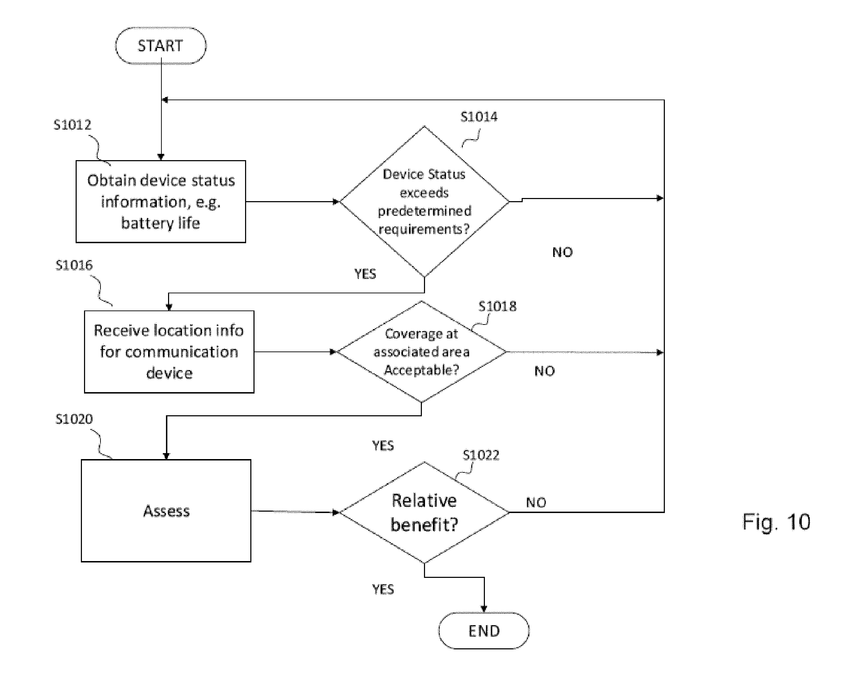

The operations described above are not necessarily performed in the order presented in Figure 9. Figure 10 shows a flowchart of an alternative exemplary method in accordance with the present disclosure.

In Figure 10, the controller first obtains device status information for a communication device, operation S1012. As in Figure 9, this operation may be achieved through an aggregator client application executing on the communication device or by inspection of data held by the serving eNodeB or the OSS for the communication device.

The controller then assesses the device status information to determine whether they exceed the requirements of the aggregator role, operation S1014.

If the device status information indicates that the device fulfils the requirements of the aggregator role (e.g. that sufficient battery life remains), the aggregator controller proceeds to obtain the location of the communication device, operation S1016. Otherwise the process returns to the start to be performed in a further iteration at a later time.

The controller then compares the location thus obtained with historic macro cell information for the proximity of the location of the communication device, operation S1018 to determine whether macrolayer radio coverage at the location associated with the communication device is acceptable (for a device that is to be used as an aggregator). The same considerations apply in this case as discussed in the context of operation S914 above.

If the radio coverage is deemed acceptable, the communication device is added to a list of candidate aggregators. Otherwise the process returns to the start to be performed in a further iteration at a later time.

At operation S1020, as for operation S920 of Figure 9, the different candidates are assessed (i.e. scored) to provide a measure of the benefit of using that devices as an aggregator.

The relative benefits of using a given candidate aggregator or group of candidate aggregators as aggregators are then compared to the benefits associated with other aggregator(s) in the area, operation S1022.

If the relative benefit is not great, the candidate aggregator is not activated and its location is stored at the controller for use in further iterations of the process.

If however the benefit from deploying given devices as aggregators is calculated to be great, that device is configure to activate an aggregator functionality. Again the location of this now-active aggregator is stored at the controller for use in further iterations of the process.

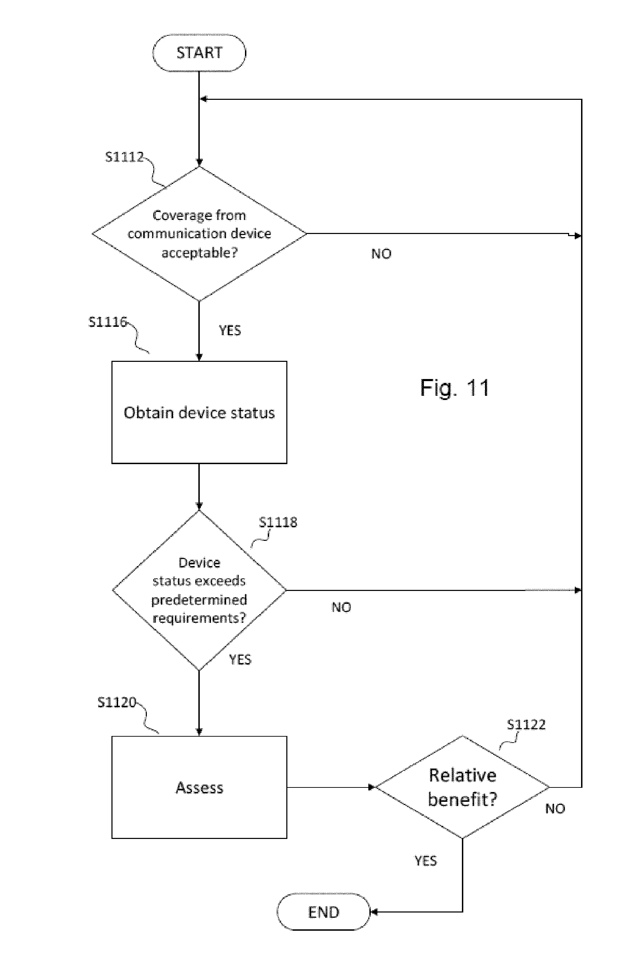

Figure 11 shows a flowchart of a further exemplary method in accordance with the present disclosure.

At operation S1112, the aggregator controller determines whether radio coverage offered by the the aggregator device is acceptable (for a device that is to be used as an aggregator). In certain embodiments, it is determined whether the radio coverage of the aggregator device relates to geographical areas for which additional radio coverage is required, such as cell edge regions. The radio coverage offered by the aggregator device may be deemed acceptable because it extends overall coverage (i.e. coverage combining the macrolayer radio coverage and any additional "aggregator coverage") and/or because it provides an alternative to the macrolayer in geographical areas where the use of the macrocell is considered particularly demanding in terms of network resource, e.g. in a cell edge region.

Certain embodiments therefore calculate the extent of additional radio coverage due to a given candidate aggregator by assuming a nominal coverage area per aggregator (in m²). The proportion of the aggregator's radio coverage that overlaps geographical areas where the use of the macrocell is considered impractical or particularly demanding is also calculated. Here the controller selects from amongst the candidates those that maximize (or at least deliver an above-threshold level of) the coverage of such poor coverage regions (e.g. cell edge areas) of the current macro cell.

In certain embodiments, the radio coverage offered by the aggregator device may be a small cell radio coverage, using either the same of a different frequency band as the macrolayer RAN. In alternative embodiments, the radio coverage offered by the aggregator device may be compliant with a RAT different from the macrolayer, e.g. WiFi.

Certain examples of aggregator devices are configured to transmit aggregated data traffic over a backhaul connection by presenting themselves to the macrolayer as a UE. For this backhaul connection to be effective, the macro layer radio coverage at the location associated with the communication device must be sufficiently good (in the sense of low SINR and/or high signal power, for instance) to support the aggregated data traffic.

If the radio coverage offered by the aggregator device is deemed acceptable, the controller proceeds to obtain device status information (such as such as battery life, mobility status, etc.) for the communication device, operation S1116. This operation may be achieved through an aggregator client application executing on the communication device or by inspection of data held by the serving eNodeB or the OSS for the communication device. Otherwise the process returns to the start to be performed in a further iteration at a later time.

The controller then assesses the device status information to determine whether conditions at the device exceed the requirements of the aggregator role, operation S1118. For example, the device status information may include information concerning the health and remaining stored energy (i.e. battery life) of the communication device - if only a short battery life is available that may not be adequate for configuration in the aggregator role.

If the device status information indicates that the device fulfils the requirements of the aggregator role (e.g. that sufficient battery life remains), the communication device is added to a list of candidate aggregators. Otherwise the process returns to the start to be performed in a further iteration at a later time.

At operation S1120, the different candidates are assessed (i.e. scored or ranked) to provide a measure of the benefit of using that devices as an aggregator.

The relative benefits of using a given candidate aggregator as an aggregator are then compared the benefits associated with other aggregator(s) in the area, operation S1122. The relative benefit may be calculated by any conventional sorting algorithm including, for example, comparison of calculated benefit values in pairs to comparison of a given candidate aggregator's benefit value (as an aggregator) to a "hybrid" benefit value derived as a function of one or more other candidate aggregator benefit values.

If the relative benefit is not great, the candidate aggregator is not activated and its location is stored at the controller for use in further iterations of the process.

If however the benefit from deploying a given devices as an aggregator is calculated to be great, that device is configure to activate an aggregator functionality. Again the location of this now-active aggregator is stored at the controller for use in further iterations of the process.

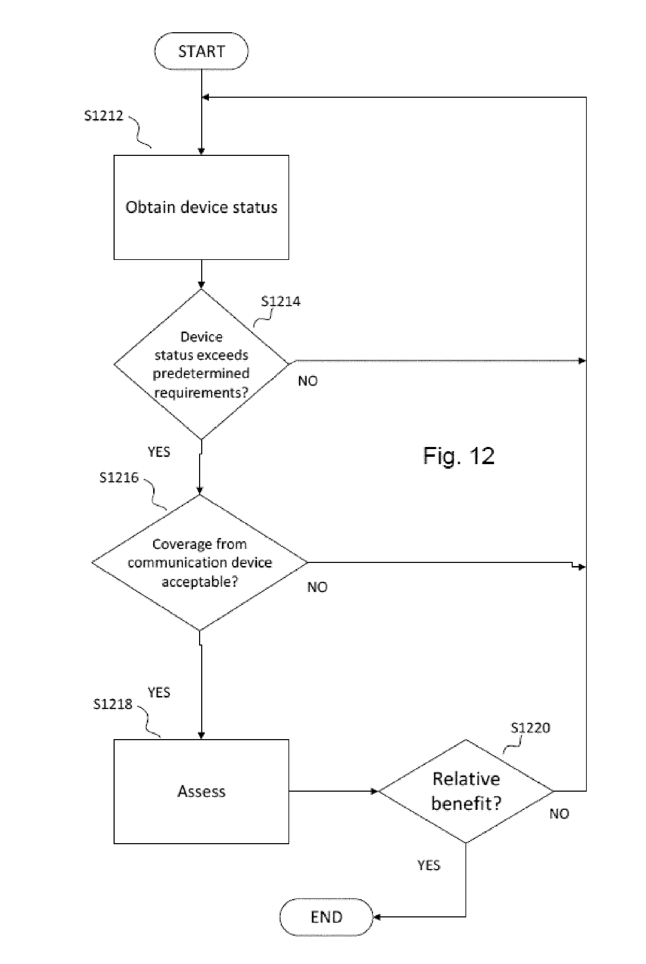

The operations described above are not necessarily performed in the order presented in Figure 11. Figure 12 shows a flowchart of a further alternative exemplary method in accordance with the present disclosure.

In Figure 12, the controller first obtains device status information for a communication device, operation S1212. As in Figure 11, this operation may be achieved through an aggregator client application executing on the communication device or by inspection of data held by the serving eNodeB or the OSS for the communication device.

The controller then assesses the device status information to determine whether conditions at the device exceed the requirements of the aggregator role, operation S1214.

If the device status information indicates that the device fulfils the requirements of the aggregator role (e.g. that sufficient battery life remains), the aggregator controller proceeds to determine whether the coverage offered by the the aggregator device is acceptable, operation S1216. Otherwise the process returns to the start to be performed in a further iteration at a later time.

In operation S1216, the acceptability of the radio coverage of the aggregator device is determined by estimating the amount of a first category of geographic area to which the candidate aggregator device would extend coverage, the first category of area corresponding to geographical regions for which additional radio coverage is required, such as (macrolayer) cell edge regions.

The radio coverage offered by the aggregator device may be deemed acceptable because it extends overall coverage (i.e. coverage combining the macrolayer radio coverage and any additional "aggregator coverage") and/or because it provides an adjunct or alternative to the macrolayer in certain categories of geographical area where the use of the macrocell is considered particularly demanding in terms of network resource, e.g. in a cell edge region. The same considerations apply in this case as discussed in the context of operation S812 above.

If the radio coverage is deemed acceptable, the communication device is added to a list of candidate aggregators. Otherwise the process returns to the start to be performed in a further iteration at a later time.

At operation S1218, as for operation S1120 of Figure 11, the different candidates are assessed (i.e. scored) to provide a measure of the benefit of using that devices as an aggregator.

The relative benefits of using a given candidate aggregator or group of candidate aggregators as aggregators are then compared to the benefits associated with other aggregator(s) in the area, operation S1220.

If the relative benefit is not great, the candidate aggregator is not activated and its location is stored at the controller for use in further iterations of the process.

If however the benefit from deploying given devices as aggregators is calculated to be great, that device is configure to activate an aggregator functionality. Again the location of this now-active aggregator is stored at the controller for use in further iterations of the process.

Alternatively and/or additionally certain embodiments of the present disclosure consider not only the location of the aggregator(s), but also the actual location of the active communication devices in the macrocell, on the assumption that a location with high accuracy level can be made available to the controller.

In a typical telecommunications network architecture that includes a radio access network (RAN), a core network (CN) and a packet data network (PDN), communication devices, such as mobile terminals, user equipment (UEs) and wireless access stations, establish wireless connections to the network by means of the RAN. In the LTE standards, the core network is referred to as the Evolved Packet Core (EPC) and the data transferred over this wireless connection are carried by a virtual connection between the UE and the PDN, known as an "EPS bearer" (where EPS stands for Evolved Packet System).

Within communication devices that offer aggregator facilities as LTE small cells, the network interface unit 560 sets up a connection to the EPC using an EPS bearer as transport layer. Network interface units 560 of these communication devices thus connect to the macrolayer in a conventional manner, appearing to the macrolayer as if they belong to a conventional UE. For convenience, such LTE small cell are added to the same Routing Area (RA) as the macro cell providing coverage to the small cell.

Optionally, such devices may be assigned a different security profile so that the "conventional" connection to the EPC may be adapted to handle an alternative connectivity to a Security Gateway (SecGW) within the EPC. Small Cell might then be allowed to connect to the EPC without establishing their own IPSec (since Small Cell traffic goes through an LTE modem (i.e. a macrolayer interface of the network interface unit 560) that connects to a macro cell, and since that macro cell is in turn connected to the SecGW).

Conveniently, this "conventional" connection also allows voice and SMS services to be delivered using a legacy circuit-switched network such as GSM. So-called Circuit Switched FallBack (CSFB) within LTE may be necessary to support circuit-switched calls in some networks.

To implement the connection 1) between the communication device in aggregator mode and the EPC and 2) between the aggregator device and nearby communication devices, the network interface unit 560 includes two separate network interfaces: a coverage extension interface arranged to provide the services of a normal Small (or Pico) Cell and a "backhaul" interface, which serves to provide "conventional" connectivity to the EPC. The network interfaces are paired when the communication device is in aggregator mode. In the following discussion the "backhaul" interface is referred to as "R-UE" in recognition of its UE-like appearance to the macrolayer.

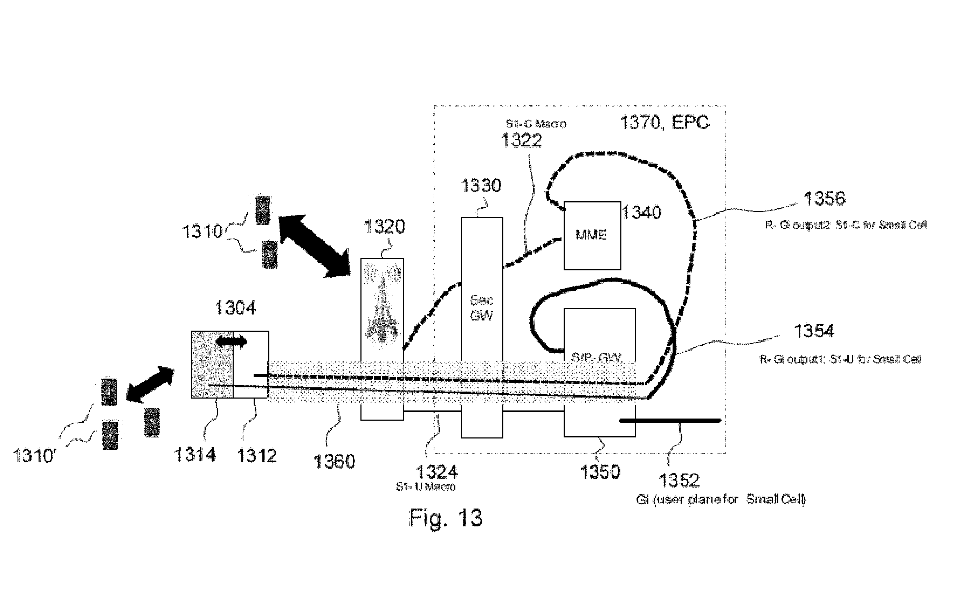

Figure 13 illustrates diagrammatically how an eNodeB in the macrolayer, provides LTE coverage (typically FDD) to a set of UEs 1310, amongst them an aggregator device 1304 having an interface R-UE 1312. Certain UEs 1310' are shown camping on the coverage area provided by the aggregator device 1304 through its small cell facility 1314.

An EPS bearer 1360 is established by the R-UE 1312 through the macro layer (i.e. eNodeB 1320) and into the EPC 1370. The EPS bearer 1360 transfers data from the aggregator device 1304 across a security gateway (SecGW) to a further gateway 1350 (which may be a serving gateway S-GW or a PDN gateway P-GW that provides an interface to the PDN). The control node in the EPC is the Mobility Management Entity (MME) 1340: this node serves to control the behaviour of the entities in the EPC and terminates certain communications from the small cell after they have been output from the EPS bearer 1360.

The "normal" output of the S/P - GW 1350 is carried over a Gi interface 1352. Where the EPS bearer output (R-Gi) includes S1-U interface data (i.e. user plane data) for the small cell, 1354, this is terminated in the S/P - GW 1350. Where the EPS bearer output (R-Gi) includes S1-C interface data (i.e. control plane data) for the small cell, 1356, this is terminated in the MME 1340. In this specification, S1-C is used as a synonymous of what is termed in 3GPP standards as S1-MME. S1-C interface data (i.e. control plane data) for the macro cell, 1322, is also terminated in the MME 1340; while S1-U interface data (i.e. user plane data) for the macro cell, 1324, is also terminated in the S/P - GW 1350.

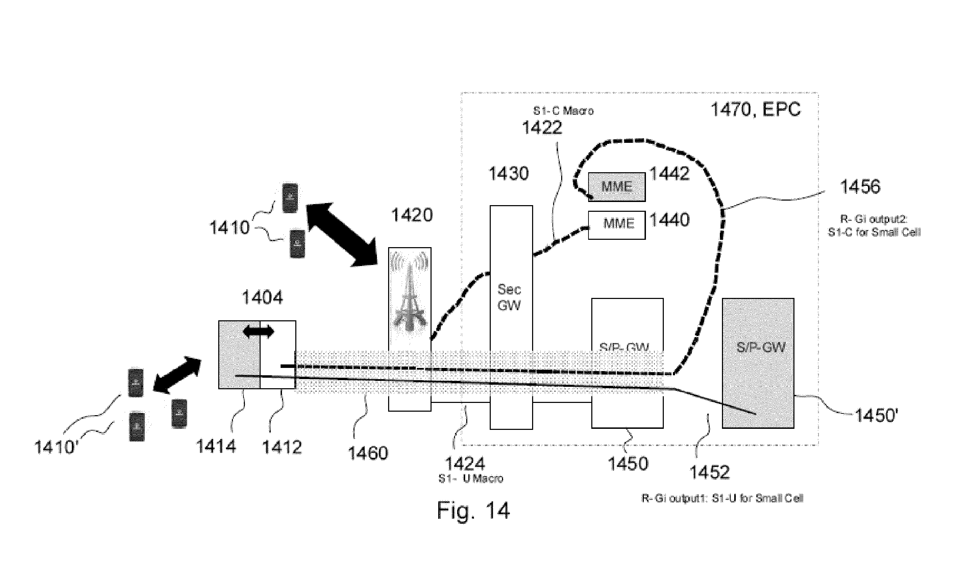

In as variation of the arrangement of Figure 13, the functions for macro and small cell operation are logically split as if they were being handled by different EPCs. Figure 14 illustrates this logical division.

As for Figure 13, Figure 14 illustrates an eNodeB 1420 representing macrolayer LTE coverage provided to a set of UEs 1410, amongst them an aggregator device 1404 having an interface R-UE 1412. Certain UEs 1410' are shown camping on the coverage area provided by the aggregator device 1404 through its small cell facility 1414.

An EPS bearer 1460 is established by the R-UE 1412 through the macro layer (i.e. eNodeB 1420) and into the EPC 1470. The EPS bearer 1460 transfers data from the aggregator device 1404 across a security gateway (SecGW) to a first logical gateway 1450 (which may be a serving gateway S-GW or a PDN gateway P-GW that provides an interface to the PDN). A first logical control node 1440 serves to control the behaviour of the entities in the EPC 1470 and terminates certain communications from the macrolayer. A second logical control node 1442 terminates certain communications from the small cell after they have been output from the EPS bearer 1460.

The "normal" output of the S/P - GW 1450 is carried over a Gi interface to the PDN. Where the EPS bearer output (R-Gi) includes S1-U interface data (i.e. user plane data) for the small cell, 1454, this is terminated in a second logical gateway, S/P - GW 1450'. Where the EPS bearer output (R-Gi) includes S1-C interface data (i.e. control plane data) for the small cell, 1456, this is terminated in the second logical MME 1442. S1-C interface data (i.e. control plane data) for the macro cell, 1422, is terminated in the first logical MME 1440; while S1-U interface data (i.e. user plane data) for the macro cell, 1424, is terminated in the first logical gateway S/P - GW 1450.

It will be appreciated that whilst various aspects and embodiments of the present invention have heretofore been described, the scope of the present invention is not limited to the particular arrangements set out herein and instead extends to encompass all arrangements, and modifications and alterations thereto, which fall within the scope of the appended claims.

For example, whilst embodiments described in the foregoing description refer to LTE, it should be noted that the aggregator architecture described may equally be deployed in telecommunications networks based on other cellular telecommunication architectures, for example 2G, 3G, LTE-Advanced (3GPP Release 10 onwards), future architectures (e.g., 5G), as well as WD-CDMA and WiMAX. The aggregator architecture is agnostic to the specific type of RAN used. In other words, the aggregator controller/controller entity is adapted to work with any RAN and/or combinations of RANs. This is, for example, one of the reasons why in certain embodiments the aggregator controller/controller entity is independent of the RAN. Similar observations apply for the communication device for providing an aggregator facility.

In addition, it will be apparent to the reader that the term radio access technology (RAT) may extend to include related technologies such as conventional WiFi technologies (i.e. compliant with the IEEE 802.11 family of standards) and/or VLC technologies, where the context requires or allows this.

Furthermore, while the above description describes the aggregation layer as providing a bridge to the cellular network for communication devices that are at the edges of cells, the skilled reader will appreciate that dynamic coverage "blackspots" may arise elsewhere within radio coverage regions (for example, due to equipment malfunction, unusual usage patterns, and/or features of the natural or built environment).

The reader will furthermore appreciate that aspects of the foregoing disclosure apply equally and without loss of generality to aggregators (and candidate aggregators) that are fixed in a single location as to aggregators (and candidate aggregators) that are in an alternative mobility state: such as nomadic or mobile.

It will also be well understood by persons of ordinary skill in the art that whilst the described embodiments implement certain functionality by means of software, that functionality could equally be implemented solely in hardware (for example by means of one or more ASICs (application specific integrated circuit)) or indeed by a mix of hardware and software. As such, the scope of the present invention should not be interpreted as being limited only to being implemented in software.

Lastly, it should also be noted that whilst the accompanying claims set out particular combinations of features described herein, the scope of the present invention is not limited to the particular combinations hereafter claimed, but instead extends to encompass any combination of features or embodiments herein disclosed irrespective of whether or not that particular combination has been specifically enumerated in the accompanying claims at this time.

## Claims

1. A method for determining functionality of communication devices in a cellular communication network including a macrolayer cellular communication network, the method comprising:
determining device status for a first communication device;
determining whether a radio coverage provided by the first communication device over a selected geographical area is acceptable; and
depending upon the device status and radio coverage determinations, selecting the first communication device as suitable for configuration to provide the radio coverage to at least one second communication device within the selected geographical area.

2. The method of claim 1, wherein determining whether a radio coverage provided by the first communication device over a selected geographical area is acceptable comprises:
estimating the radio coverage offered by the first communication device over the selected geographical area; and
generating an indication of acceptability when the estimated radio coverage offered by the first communication device improves a radio coverage provided in the cellular communication network.

3. The method of claim 1 or claim 2, wherein determining whether a radio coverage provided by the first communication device over a selected geographical area is acceptable includes:
determining whether the radio performance of the macrolayer cellular communication network provided to the first communication device is acceptable.

4. The method of claim 3, wherein determining whether the radio performance of the macrolayer cellular communication network provided to the first communication device is acceptable comprises:
determining a location of the first communication device;
requesting historical data for a region corresponding to the location, said data including at least one metric of the radio performance of the macrolayer cellular communication network at the region; and
generating an indication of acceptability if the metric exceeds a coverage threshold.

5. The method of claim 3, wherein determining whether the radio performance of the macrolayer cellular communication network provided to the first communication device is acceptable comprises:
obtaining a measurement of the strength of radio signal from the macrolayer communication network provided to the first communication device; and
generating an indication of acceptability if the measured strength exceeds a signal strength threshold.

6. The method of any one of claims 1 to 5, further comprising:
configuring the first communication device to provide the radio coverage depending upon comparison with at least one further communication device selected as suitable for configuration to provide a corresponding radio coverage to at least one second communication device in the selected geographical area.

7. The method of claim 6, wherein the at least one further communication device is selected as suitable for configuration to provide a corresponding radio coverage by: determining device status for said further communication device; determining whether a further radio coverage provided by the further communication device over the selected geographical area is acceptable; and selecting the at least one further communication device as suitable for configuration to provide the radio coverage in dependence upon the device status and radio coverage determinations; and
wherein the comparison with at least one further communication device comprises comparing the radio coverage provided by the first communication device with the radio coverage provided by the at least one further communication device.

8. The method of claim 6, wherein the comparison with at least one further communication device comprises comparing the radio coverage area provided by the first communication device with the radio coverage area provided by a respective further communication device.

9. The method of claim 8, wherein the comparison of radio coverage areas comprises:
for each communication device, estimating the proportion of the corresponding coverage area that overlaps a cell edge region of the radio coverage provided in the cellular communication network; and
comparing the estimated proportion for the first communication device with the estimated proportions for respective further communication devices.

10. The method of any one of the preceding claims, wherein determining device status includes obtaining an indication of remaining battery life, and
wherein the first communication device is only selected as suitable for configuration to provide the radio coverage to the at least one second communication device within the selected geographical area when the indication of remaining battery life exceeds a reference battery life level.

11. The method of any one of claims 6 to 10, wherein configuring the first communication device to provide the radio coverage includes:
instructing the first communication device to establish a backhaul connection to a node in the core network; and
instructing the first communication device to transmit downlink radio frames in the selected geographical area.

12. The method of any one of claims 6 to 11, wherein configuring the first communication device to provide the radio coverage includes:
determining the current time of the day or day of the week;
requesting historical data for the first communication device, said historical data including a record of device locations over a period of time;
estimating the likely location of the first communication device at the current time by extrapolating from the historical data; and
configuring the first communication device only when the likely location is associated with an acceptable radio coverage.

13. The method of any one of the preceding claims, further comprising:
determining respective locations for the or each second communication device; and
configuring the first communication device to provide the radio coverage by matching the geographical coverage area of the first communication device to the locations of at least one second communication device and instructing the first communication device to provide the radio coverage when the matched second communication devices have locations in a cell edge region of the radio coverage provided in the cellular communication network.

14. A controller entity for determining functionality of communication devices in a cellular communication network including a plurality of communication devices and a macrolayer cellular communication network, the controller entity comprising a controller unit configured:
to determine device status for a first communication device;
to determine whether a radio coverage provided by the first communication device over a selected geographical area is acceptable; and
depending upon the device status and radio coverage determinations, to select the first communication device as suitable for configuration to provide the radio coverage to at least one second communication device within the selected geographical area.

15. A computer program comprising instructions arranged, when executed, to implement a method in accordance with any one of claims 1 to 13.
